(19) **Europäisches Patentamt** / **European Patent Office** / **Office européen des brevets**

(11) **EP 2 303 544 B1**

(12) **EUROPÄISCHE PATENTSCHRIFT**

(45) Veröffentlichungstag und Bekanntmachung des Hinweises auf die Patenterteilung:
**23.07.2014 Patentblatt 2014/30**

(21) Anmeldenummer: **09765583.1**

(22) Anmeldetag: **12.06.2009**

(51) Int Cl.:
**B29C 47/40** *(2006.01)*   **B29C 47/60** *(2006.01)*

(86) Internationale Anmeldenummer:
**PCT/EP2009/004251**

(87) Internationale Veröffentlichungsnummer:
**WO 2009/153003 (23.12.2009 Gazette 2009/52)**

(54) **EINGÄNGIGE SCHNECKENELEMENTE MIT REDUZIERTEM KAMMWINKEL, VERWENDUNG UND VERFAHREN**

SINGLE-FLIGHT SCREW ELEMENTS HAVING A REDUCED RIDGE ANGLE, USE AND METHOD

ÉLÉMENTS DE VIS SANS FIN À ANGLE DE SOMMET DE FILET RÉDUIT, UTILASION ET PROCÉDÉ

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **20.06.2008 DE 102008029304**

(43) Veröffentlichungstag der Anmeldung:
**06.04.2011 Patentblatt 2011/14**

(73) Patentinhaber: **Bayer Intellectual Property GmbH 40789 Monheim (DE)**

(72) Erfinder:
- **BIERDEL, Michael**
  **51373 Leverkusen (DE)**
- **KÖNIG, Thomas**
  **51375 Leverkusen (DE)**
- **LIESENFELDER, Ulrich**
  **51469 Bergisch Gladbach (DE)**

(74) Vertreter: **BIP Patents c/o Bayer Intellectual Property GmbH Creative Campus Monheim Alfred-Nobel-Straße 10 40789 Monheim (DE)**

(56) Entgegenhaltungen:
EP-A- 1 013 402     WO-A-02/076707
WO-A1-02/070231     WO-A2-02/09919
DE-A1-102005 053 907   US-A- 3 254 367
US-A- 5 215 764     US-A- 5 573 332

- DATABASE WPI Week 200466 Thomson Scientific, London, GB; AN 2004-672246 XP002551600 -& JP 2004 262177 A (JAPAN STEEL WORKS LTD) 24. September 2004 (2004-09-24)
- KLEMENS KOHLGRÜBER: "Der gleichläufige Doppelschneckenextruder" 2007, CARL HANSER VERLAG , MÜNCHEN , XP002551599 Seite 245, Absatz 3

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 303 544 B1

**Beschreibung**

Die Erfindung betrifft Schneckenelemente für mehrwellige Schneckenmaschinen mit paarweise gleichsinnigen und paarweise exakt abschabenden Schneckenwellen, die Verwendung der Schneckenelemente in mehrwelligen Schneckenmaschinen sowie ein Verfahren zur Extrusion plastischer Massen.

Gleichsinnig drehende Zwei- oder ggf. Mehrwellenmaschinen, deren Rotoren sich gegenseitig exakt abschaben, sind bereits seit langem bekannt (siehe z.B. DP 862 668). In der Polymerherstellung und -verarbeitung haben Schneckenmaschinen, die auf dem Prinzip exakt abschabender Profile beruhen, eine vielfältige Nutzung erfahren. Dies beruht vor allem darauf, dass Polymerschmelzen an Oberflächen anhaften und unter üblichen Verarbeitungstemperaturen mit der Zeit degradieren, was durch die selbstreinigende Wirkung der exakt abschabenden Schnecken unterbunden wird. Regeln zur Erzeugung exakt abschabender Schneckenprofile sind beispielsweise in [1] ([1] = Klemens Kohlgrüber: Der gleichläufige Doppelschneckenextruder, Hanser Verlag München 2007, S.96 ff) dargestellt. Hier wird auch beschrieben, dass ein vorgegebenes Schneckenprofil auf der 1. Welle eines Doppelschneckenextruders das Schneckenprofil auf der 2. Welle eines Doppelschneckenextruders bestimmt. Das Schneckenprofil auf der 1. Welle des Doppelschneckenextruders wird daher als das erzeugende Schneckenprofil bezeichnet. Das Schneckenprofil auf der 2. Welle des Doppelschneckenextruders folgt aus dem Schneckenprofil der 1. Welle des Doppelschneckenextruders und wird daher als das erzeugte Schneckenprofil bezeichnet. Bei einem Mehrwellenextruder werden das erzeugende Schneckenprofil und das erzeugte Schneckenprofil auf benachbarten Wellen immer abwechselnd eingesetzt. Moderne Doppelschneckenextruder verfügen über ein Baukastensystem, bei dem verschiedene Schneckenelemente auf einer Kemwelle aufgezogen werden können. Hiermit kann der Fachmann den Doppelschneckenextruder an die jeweilige Verfahrensaufgabe anpassen.

Unter einer plastischen Masse wird eine verformbare Masse verstanden. Beispiele für plastische Massen sind Polymerschmelzen, vor allem von Thermoplasten, sowie Elastomere, Mischungen von Polymerschmelzen oder Dispersionen von Polymerschmelzen mit Feststoffen, Flüssigkeiten oder Gasen.

Die Extrusion von plastischen Massen spielt insbesondere bei der Herstellung, Aufbereitung und Verarbeitung von Polymeren eine große Rolle. Unter Extrusion wird die Behandlung eines Stoffes oder Stoffgemisches in einem gleichsinnig drehenden Doppelschnecken- oder Mehrwellenextruder, wie er umfassend in [1] beschrieben ist, verstanden.

Bei der Herstellung von Polymeren erfolgt eine Extrusion z.B. zur Entgasung der Polymere (siehe z.B. [1] Seiten 191 bis 212).

Bei der Aufbereitung von Polymeren erfolgt eine Extrusion z.B. zur Einmischung von Zusatzstoffen oder zum Mischen von verschiedenen Polymeren, die sich z.B. in chemischer Zusammensetzung, Molekulargewicht oder Molekülstruktur unterscheiden (siehe z.B. [1] Seiten 59 bis 93). Dieses auch als Compoundierung bezeichnete Verfahren dient der Polymeraufbereitung zur Herstellung der fertigen Kunststoff-Formmasse (das Compound) unter Einsatz der Kunststoffrohstoffe, die üblicherweise plastifiziert werden, und unter Zugabe und Einmischen von Füll- und/oder Verstärkungsstoffen, Weichmachern, Haftvermittlern, Gleitmitteln, Stabilisatoren, Farben etc. Die Aufbereitung umfasst häufig auch die Entfernung von flüchtigen Bestandteilen wie z.B. Luft und Wasser. Die Aufbereitung kann auch eine chemische Reaktion wie z.B. Pfropfung, Modifikation von funktionellen Gruppen oder Modifikationen des Molekulargewichtes durch gezielten Auf- oder Abbau des Molekulargewichts beinhalten.

Bei der Verarbeitung von Polymeren werden die Polymere bevorzugt in die Form eines Halbzeuges, eines gebrauchsfertigen Produktes oder eines Bauteiles gebracht. Die Verarbeitung kann z.B. durch Spritzgießen, Extrusion, Folienblasen, Folienziehen oder Verspinnen erfolgen. Die Verarbeitung kann auch Mischungen von Polymeren mit Füll- und Zuschlagstoffen und Additiven sowie chemische Modifikationen wie z.B. Vulkanisation umfassen.

Die Behandlung plastischer Massen während einer Extrusion umfasst eine oder mehrere der Verfahrensoperationen Fördern, Aufschmelzen, Dispergieren, Mischen, Entgasen und Druckaufbau.

Wie allgemein bekannt und z.B. in [1] auf den Seiten 169 bis 190 beschrieben, lässt sich Mischen in distributives und dispersives Mischen einteilen. Unter distributivem Mischen wird das gleichmäßige Verteilen von verschiedenen Komponenten in einem betrachteten Volumen verstanden. Distributives Mischen liegt zum Beispiel bei der Vermischung gleichartiger bzw. miteinander verträglicher Polymere vor. Beim dispersiven Mischen werden Feststoffteilchen, Flüssigkeitstropfen oder Gasblasen zunächst zerteilt. Für das Zerteilen müssen ausreichend große Scherkräfte aufgebracht werden, um zum Beispiel die Oberflächenspannung an der Grenzfläche zwischen Polymerschmelze und einem Additiv zu überwinden.

In der Veröffentlichung [1] auf Seite 73ff wird die Schmelzeförderung und der Druckaufbau beschrieben. Die Schmelzeförderzonen in Extruderschnecken dienen dazu, das Produkt von einer Verfahrenszone zur nächsten zu transportieren sowie Füllstoffe einzuziehen. Schmelzeförderzonen sind in der Regel teilgefüllt, wie z.B. beim Transport des Produktes von einer zur nächsten Verfahrenszone, beim Entgasen und in Verweilzeitzonen. Die zum Fördern benötigte Energie wird dissipiert und macht sich nachteilig in einer Temperaturerhöhung der Polymerschmelze bemerkbar. In einer Förderzone sollten daher Schneckenelemente verwendet werden, die möglichst wenig Energie dissipieren. Für die reine Schmelzeförderung sind Gewindeelemente mit Gangsteigungen von einmal dem Extrudergehäusedurchmesser D üblich [1].

Vor Druckverbrauchem innerhalb des Extruders wie z.B. Rückförderelementen, Mischelementen, rückfördemden oder neutralen Knetblöcken und vor Druckverbrauchern außerhalb des Extruders wie z.B. Düsenplatten, Extrusionswerkzeugen und Schmelzefiltern entsteht innerhalb des Extruders eine Rückstauzone, in der vollgefüllt gefördert wird und in der der Druck zum Überwinden des Druckverbrauchers aufgebaut werden muss. Die Druckaufbauzone eines Extruders, in der der zum Austrag der Schmelze notwendige Druck erzeugt wird, wird als Austragszone bezeichnet. Die in die Polymerschmelze eingebrachte Energie spaltet sich auf in Nutzleistung zum Druckaufbau und zum Fördern der Schmelze und in Dissipationsleistung, die sich nachteilig in einer Temperaturerhöhung der Schmelze bemerkbar macht. In der Druckaufbauzone erfolgt eine starke Rückströmung der Schmelze über die Schneckenkämme und dadurch ein erhöhter Energieeintrag [1]. In einer Druckaufbauzone sollten daher Schneckenelemente verwendet werden, die möglichst wenig Energie dissipieren.

Dem Fachmann ist weiterhin bekannt ([1], Seiten 129 bis 146), dass der Wirkungsgrad beim Druckaufbau zweigängiger Förderelemente mit dem bekannten Erdmenger-Schneckenprofil bei etwa 10% liegt. Ein Druckanstieg von 50 bar bei einer Dichte der Schmelze von 1000 kg/m$^3$ und einer Wärmekapazität der Schmelze von 2000 J/kg/K bei besagtem Wirkungsgrad von 10% führt zu einem Temperaturanstieg von 25 K ([1], Seite 120). Diese Erwärmung kann zu Schädigungen im Produkt wie z.B. Veränderung in Geruch, Farbe, chemischer Zusammensetzung oder Molekulargewicht oder zur Bildung von Inhomogenitäten im Produkt wie Gelkörpern oder Stippen führen.

Bei der Extrusion von Polyethylen und Polyethylen-Copolymeren zeigen sich bei zu hoher Temperatur Aufbau von Molekulargewicht, Verzweigung und Vernetzung. Weiterhin reagieren Polyethylen und Polyethylen-Copolymere mit Luftsauerstoff in dem dem Fachmann bekannten Autoxidationszyklus ([2] Hepperle,J.: Schädigungsmechanismen bei Polymeren. Polymeraufbereitung 2002, VDI-K, VDI-Verlag GmbH, [3] Zweifel, H.: Stabilization of Polymeric Materials. Springer, Berlin, 1997, [4] Schwarzenbach, K. et al.: Antioxidants. In Zweifel, H. (Hrsg.): Plastics Additives Handbook. Hanser, München, 2001, [5] Cheng, H.N., Schilling, F.C., Bovey, F.A.: 13C Nuclear Magnetic Resonance Observation of the Oxidation of Polyethylene, Macromolecules 9 (1976) S. 363-365) unter Bildung von geruchsintensiven und daher störenden niedermolekularen Komponenten wie beispielsweise Ketone, Aldehyde, Carbonsäuren, Hydroperoxide, Ester, Lactone und Alkohole. Bei der Extrusion von Copolymeren auf Basis von Polyethylen und Vinylacetat bildet sich bei zu hoher Temperatur zusätzlich geruchsintensive und korrosive Essigsäure.

Bei der Extrusion von Polypropylen und Polypropylen-Copolymeren zeigt sich bei zu hoher Temperatur Abbau von Molekulargewicht. Weiterhin reagieren Polyproplyen und Polypropylen-Copolymere mit Luftsauerstoff in dem Autoxidationszyklus unter Bildung von geruchsintensiven und daher störenden niedermolekularen Komponenten wie beispielsweise Ketone, Aldehyde, Carbonsäuren, Hydroperoxide, Ester, Lactone und Alkohole.

Bei der Extrusion von Polyvinylchlorid spaltet das Produkt bei zu hoher Temperatur unter Verfärbung korrosives Salzsäuregas ab, wobei die Salzsäure wiederum katalytisch bei der weiteren Abspaltung von Salzsäure wirkt.

Bei der Extrusion von Polystyrol bildet sich bei zu hoher Temperatur gesundheitsschädliches Styrol sowie dimeres und trimeres Styrol, mit Abbau von Molekulargewicht und entsprechender Verschlechterung von mechanischen Eigenschaften.

Bei der Extrusion von Polystyrol - Acrylnitril - Copolymer (SAN) verfärbt sich das Produkt unter thermischer Belastung gelblich, was zu verringerter Transparenz führt, und bildet das krebserregende Monomer Acrylnitril sowie Styrol, unter Abbau von Molekulargewicht und Verschlechterung von mechanischen Eigenschaften.

Bei der Extrusion von aromatischen Polycarbonaten verfärbt sich das Produkt unter zu hoher thermischer Belastung, insbesondere unter Sauerstoffeinfluss, gelblich, was zu verringerter Transparenz führt, und zeigt Abbau im Molekulargewicht, insbesondere unter Einfluss von Wasser. Auch werden unter erhöhter Temperatur Monomere wie z.B. Bisphenol A zurückgespalten.

Bei der Extrusion von Polyestern wie z.B. Polyethylenterephtalat, Polybutylenterephtaltat und Polytrimethylenterephtalat ergibt sich unter zu hoher Temperatur und Wassereinfluss eine Verringerung im Molekulargewicht und Verschiebung der Endgruppen im Molekül. Dies ist vor allem beim Recycling von Polyethylenterephtalat problematisch. Polyethylenterephtalat spaltet bei hoher Temperatur Acetaldehyd ab, was beispielsweise beim Inhalt von Getränkeflaschen zu Geschmacksänderungen führen kann.

Bei der Extrusion von mit Dienkautschuken insbesondere mit Butadienkautschuk schlagzäh modifizierten Thermoplasten, insbesondere schlagzäh modifizierte Polystyroltypen (HIPS) und schlagzäh modifiziertes SAN (Acrylnitril-Butadien-Styrol, ABS) spaltet sich unter zu hoher Temperatur krebserregendes Butadien und Acrylnitril sowie giftiges Vinylcyclohexen ab. Weiterhin vernetzt der Dienkautschuk, so dass Verschlechterungen der mechanischen Eigenschaften des Produktes auftreten.

Bei der Extrusion von Polyoxymethylen spaltet sich bei zu hoher Temperatur giftiges Formaldehyd ab.

Bei der Extrusion von Polyamiden wie Polyamid 6, Polyamid 6,6, Polyamid 4,6, Polyamid 11 und Polyamid 12 führt zu hohe Temperatur zu Verfärbungen des Produktes und zu Molekulargewichtsabbau und zur Rückbildung von Monomeren und Dimeren und damit zu Verschlechterung von mechanischen Eigenschaften, vor allem in Gegenwart von Wasser.

Bei der Extrusion von thermoplastischen Polyurethanen führt zu hohe Temperatur zu Veränderungen der Molekülstruktur durch Umurethanisierung und, in Gegenwart von Wasser, zu Molekulargewichtsabbau. Beides beeinflusst die Eigenschaften des thermoplastischen Polyurethans in unerwünschter Weise.

Bei der Extrusion von Polymethylmethacrylat spaltet bei zu hoher thermischer Belastung unter Abbau von Molekulargewicht Methylmethacrylat ab, was zu Geruchsbelästigung und zu verschlechterten mechanischen Eigenschaften führt.

Bei der Extrusion von Polyphenylensulfid werden bei zu hoher Temperatur schwefelhaltige organische und anorganische Verbindungen abgespalten, die zu Geruchsbelästigung führen und zu Korrosion an den Extrusionswerkzeugen führen können. Auch werden hierbei niedermolekulare Oligomere und Monomere gebildet und Molekulargewicht abgebaut, was die mechanischen Eigenschaften von Polyphenylensulfid verschlechtert.

Bei der Extrusion von Polyphenylsulfon werden bei zu hoher Temperatur organische Verbindungen abgespalten, vor allem in Gegenwart von Wasser. Auch reduziert sich das Molekulargewicht, wodurch die mechanischen Eigenschaften verschlechtert werden.

Bei der Extrusion von Polyphenylenether werden bei zu hoher Temperatur niedermolekulare organische Verbindungen abgespalten, wobei sich das Molekulargewicht reduziert. Dies führt zu einer Verschlechterung der mechanischen Eigenschaften des Produktes.

Bei der Extrusion von Dien-Kautschuken wie beispielsweise Polybutadien (BR), Naturkautschuk (NR) und synthetisches Polyisopren (IR), Butylkautschuk (IIR), Chlorbutylkautschuk (CIIR), Brombutylkautschuk (BIIR), Styrol-Butadien-Kautschuk (SBR), Polychloropren (CR), Butadien-Acrylnitril-Kautschuk (NBR), teilweise hydrierter Butadien-Acrylnitril-Kautschuk (HNBR) sowie Ethylen-Proplyen-Dien-Copolymere (EPDM) bildet sich bei zu hoher Temperatur durch Vernetzung Gel, das zu Verschlechterung von mechanischen Eigenschaften der daraus hergestellten Bauteile führet. Bei Chlor- und Brombutylkautschuk kann unter erhöhter Temperatur korrosives Salzsäure- bzw. Bromwasserstoffgas abgespalten werden, das wiederum die weitere Zersetzung des Polymers katalysiert.

Kautschukmischungen, die Vulkanisatoren wie z.B. Schwefel oder Peroxide enthalten, werden durch zu hohe Temperaturen bei der Extrusion zum vorzeitigen Vulkanisieren gebracht. Dies führt dazu, dass aus diesen Kautschukmischungen keine Produkte mehr hergestellt werden können.

Bei der Extrusion von Mischungen aus einem oder mehreren Polymeren bei zu hohen Temperaturen treten jeweils die Nachteile der Extrusion der einzelnen Polymere auf.

Der Energieeintrag in einem Doppelschneckenextruder wird durch die Prozessparameter Durchsatz und Drehzahl, durch die Materialeigenschaften des Produktes sowie durch die Geometrie der eingesetzten Schneckenwellen festgelegt.

Nach dem Stand der Technik [1] (siehe z.B. Seite 101) liegt die Geometrie der exakt abschabenden Schneckenelemente durch Angabe der unabhängigen Größen Gangzahl z, Achsabstand a und Außenradius ra der exakt abschabenden Kontur fest. Der Kammwinkel, in dessen Bereich alle Punkte des Profils das Gehäuse abreinigen, ist nach dem Stand der Technik keine einstellbare und an die Aufgabenstellung anpassbare Größe, sondern ergibt sich aus Gl. 1 zu

$$KW0 = \frac{\pi}{z} - 2\arccos\left(\frac{a}{2 \cdot ra}\right) \qquad \text{(Gl. 1)}$$

wobei KWO der Kammwinkel des exakt abschabenden Profils im Bogenmaß und $\pi$ die Kreiszahl ($\pi \approx 3{,}14159$) ist. Die Summe der Kammwinkel über beide Elemente eines dicht kämmenden Elementepaares *SKW0* ergibt sich nach dem Stand der Technik zwangsläufig zu

$$SKW0 = 2\pi - 4z\arccos\left(\frac{a}{2 \cdot ra}\right) \qquad \text{(Gl. 2)}$$

Schneckenprofile können mit einem oder mehreren Schneckengängen ausgeführt werden. Bekannte Schneckenprofile mit genau einem Schneckengang sind für gutes Fördervermögen und Steifigkeit beim Druckaufbau bekannt. Sie weisen einen sehr breiten Schneckenkamm auf, der mit engem Spalt das Schneckengehäuse abreinigt. Dem Fachmann ist bekannt, dass im Bereich der Schneckenkämme aufgrund des engen Spaltes besonders viel Energie in der Schmelze dissipiert wird, was lokal zu starken Überhitzungen im Produkt führt. Vor allem ein großer Kammwinkel ist hierbei schädlich.

In gleichläufigen Doppelschneckenextrudern nach dem Stand der Technik werden deshalb überwiegend zweigängige Schneckenprofile eingesetzt, die nur einen schmalen Schneckenkamm aufweisen. Diese sind jedoch erheblich weniger effektiv im Druckaufbau als die eingängigen Schneckenprofile.

Der Antriebsenergie wird dem Doppelschneckenextruder in Form von hochwertiger elektrischer Energie zugeführt, so dass eine Reduzierung des Energieeintrages auch aus Kosten- und Umweltgründen anzustreben ist. Weiterhin begrenzt ein hoher Energieeintrag bei vielen Prozessen auch den möglichen Durchsatz des Doppelschneckenextruders und damit die Wirtschaftlichkeit.

In US 3 900 187 sind eingängige Schneckenprofile mit reduziertem Kammwinkel beschrieben. Schneckenelemente mit solchen Schneckenprofilen verfügen bei ausreichend effektivem Druckaufbau über eine geringere Scherwirkung als die übrigen bekannten eingängigen Schneckenelemente. In US 3 900 187 wird jedoch lediglich die Erzeugung von achsensymmetrischen Schneckenprofilen offenbart, bei denen der an den Schneckenkamm angrenzende Bereich der Profilflanke durch einen Kreisbogen dargestellt wird, dessen Mittelpunkt auf der Senkrechten zur Symmetrieachse des Profils durch den Drehpunkt liegt. Die in US 3 900 187 lassen sich damit nicht auf spezielle Aufgabenstellungen anpassen und sind in ihrer Anwendung limitiert.

Ausgehend vom Stand der Technik stellt sich damit die Aufgabe, Schneckenelemente bereitzustellen, die einen zu den bekannten eingängigen Schneckenelementen vergleichbaren Druckaufbau erzeugen, die jedoch weniger Scherung auf das zu verarbeitende Gut ausüben und somit die Produktqualität nicht beeinträchtigen. Die gesuchten Schneckenelemente sollten möglichst vielseitig gestaltet werden können, um die Scher- und Dehnbeanspruchungen, die die rotierenden Schneckenprofile dem zu verarbeitenden Polymeren aufprägen, an die jeweilige Aufgabenstellung anpassen zu können.

Überraschend wurden Schneckenelemente nach Anspruch 1 gefunden, mit denen diese Aufgabe gelöst werden kann, und bei denen die Summe der Kammwinkel eines Elementepaares kleiner ist als $2\pi - 4\arccos\left(\dfrac{a}{2\cdot ra}\right)$, wobei bei achsensymmetrischen Schneckenprofilen keiner der Mittelpunkte der Flankenkreise auf der Senkrechten zur Symmetrieachse des Profils liegt, die durch den Drehpunkt geht.

Gegenstand der vorliegenden Erfindung sind daher Schneckenelemente für mehrwellige Schneckenmaschinen mit paarweise gleichsinnigen und paarweise exakt abschabenden Schneckenwellen, mit jeweils genau einem Schneckengang, mit Achsabstand a und Außenradius ra, dadurch gekennzeichnet, dass die Summe der Kammwinkel eines erzeugenden und eines erzeugten Schneckenprofils kleiner ist als $2\pi - 4\arccos\left(\dfrac{a}{2\cdot ra}\right)$ und bei achsensymmetrischen Schneckenprofilen keiner der Mittelpunkte der Flankenkreise auf der Senkrechten zur Symmetrieachse des Profils liegt, die durch den Drehpunkt geht.

Die Querschnittprofile - im Folgenden auch kurz Profile oder auch Schneckenprofile genannt - erfindungsgemäßer Schneckenelemente lassen sich durch eine Anordnung von Kreisbögen eindeutig beschreiben.

Bevorzugt setzen sich die Schneckenprofile erfindungsgemäßer Schneckenelemente im Querschnitt aus n Kreisbögen zusammen, wobei n eine ganze Zahl größer als 4 ist. Jeder der n Kreisbögen besitzt einen Anfangs- und einen Endpunkt.

Die Position eines jeden Kreisbogens j (j=1 bis n) ist durch die Angabe von zwei verschiedenen Punkten eindeutig festlegbar. Zweckmäßigerweise wird die Position eines Kreisbogens durch Angabe des Mittelpunktes und des Anfangs- oder Endpunktes festgelegt. Die Größe eines einzelnen Kreisbogens j ist durch den Radius $r_j$ und den Winkel $\alpha_j$ um den Mittelpunkt zwischen Anfangs- und Endpunkt festgelegt, wobei der Radius $r_j$ größer oder gleich 0 und kleiner oder gleich dem Achsabstand a zwischen den Wellen ist und der Winkel $\alpha_j$ im Bogenmaß größer oder gleich 0 und kleiner oder gleich $2\pi$ ist, wobei $\pi$ die Kreiszahl ($\pi\approx3{,}14159$) ist.

Die Profile erfmdungsgemäßer Schneckelemente können auch einen oder mehrere "Knicke" aufweisen. Ein Knick wird zweckmäßigerweise wie ein Kreisbogen mit einem Radius r = 0 behandelt. Die "Größe des Knicks" ist durch den entsprechenden Winkel des Kreisbogens mit dem Radius r = 0 gegeben, d.h. bei einem Knick erfolgt ein Übergang eines ersten Kreisbogens durch Drehung um den Winkel eines zweiten Kreisbogens mit Radius r = 0 in einen dritten Kreisbogen. Oder anders ausgedrückt: eine Tangente an den ersten Kreisbogen im Mittelpunkt des zweiten Kreisbogens mit dem Radius r = 0 schneidet eine Tangente an den dritten Kreisbogen ebenfalls im Mittelpunkt des zweiten Kreisbogens in einem Winkel, der dem Winkel des zweiten Kreisbogens entspricht. Unter Berücksichtigung des zweiten Kreisbogens gehen alle benachbarten Kreisbögen (erster → zweiter → dritter) tangential ineinander über. Zweckmäßigerweise wird ein Kreisbogen mit einem Radius r = 0 wie ein Kreisbogen behandelt, dessen Radius gleich eps ist, wobei eps eine sehr kleine positive reelle Zahl ist, die gegen 0 strebt (eps<<1, eps → 0).

Bei einem erfindungsgemäßen Profil gehen die Kreisbögen an ihren Anfangs- und Endpunkten stets tangential ineinander über.

Die Bereiche eines Schneckenprofils, die gleich dem Schneckenaußenradius sind, werden als Kammbereiche bezeichnet. Die Bereiche eines Schneckenprofils, die gleich dem Kernradius sind, werden als Nutbereiche bezeichnet. Die Bereiche eines Schneckenprofils, die kleiner als der Schneckenaußenradius und größer als der Kernradius sind, werden als Flankenbereiche bezeichnet.

Erfindungsgemäße Schneckenelemente sind in ihrem Querschnitt dadurch gekennzeichnet, dass

- das erzeugende Schneckenprofil und das erzeugte Schneckenprofil in einer Ebene liegen,
- die Drehachse des erzeugenden Schneckenprofils und die Drehachse des erzeugten Schneckenprofils in einem Abstand a (Achsabstand) jeweils senkrecht auf der besagten Ebene der Schneckenprofile stehen, wobei der Schnittpunkt der Drehachse des erzeugenden Schneckenprofils mit der besagten Ebene als Drehpunkt des erzeugenden Schneckenprofils und der Schnittpunkt der Drehachse des erzeugten Schneckenprofils mit der besagten Ebene als Drehpunkt des erzeugten Schneckenprofils bezeichnet wird,
- die Anzahl der Kreisbögen des erzeugenden Schneckenprofils n ist,
- der Außenradius ra des erzeugenden Schneckenprofils größer oder gleich 0 (ra $\geq$ 0) und kleiner oder gleich dem Achsabstand (ra $\leq$ a) ist,
- der Kernradius ri des erzeugenden Schneckenprofils größer als 0 (ri > 0) und kleiner oder gleich ra (ri $\leq$ ra) ist,
- die Kreisbögen des erzeugenden Schneckenprofils ein geschlossenes Profil bilden, d.h. die Summe der Winkel $\alpha_j$ aller Kreisbögen j gleich $2\pi$ ist,
- die Kreisbögen des erzeugenden Schneckenprofils ein konvexes Profil bilden,
- jeder der Kreisbögen des erzeugenden Schneckenprofils innerhalb oder auf den Grenzen eines Kreisrings mit dem Außenradius ra und dem Kernradius ri liegt, dessen Mittelpunkt auf dem Drehpunkt des erzeugenden Schneckenprofils liegt,
- genau einer der Kreisbögen des erzeugenden Schneckenprofils den Außenradius ra des erzeugenden Schneckenprofils hat,
- genau einer der Kreisbögen des erzeugenden Schneckenprofils den Kernradius ri des erzeugenden Schneckenprofils hat,
- die Anzahl der Kreisbögen n' des erzeugten Schneckenprofils gleich der Anzahl der Kreisbögen n des erzeugenden Schneckenprofils ist,
- der Außenradius ra' des erzeugten Schneckenprofils gleich der Differenz aus Achsabstand und Kernradius ri des erzeugenden Schneckenprofils ist (ra' = a - ri),
- der Kernradius ri' des erzeugten Schneckenprofils gleich der Differenz aus Achsabstand und Außenradius ra des erzeugenden Schneckenprofils ist (ri' = a - ra),
- der Winkel $\alpha_j$' des j'-ten Kreisbogens des erzeugten Schneckenprofils gleich dem Winkel $\alpha_j$ des j-ten Kreisbogens des erzeugenden Schneckenprofils ist, wobei j und j' ganze Zahlen sind, die gemeinsam alle Werte im Bereich von 1 bis zur Anzahl der Kreisbögen n beziehungsweise n' durchlaufen,
- die Summe von Radius $r_j$' des j'-ten Kreisbogens des erzeugten Schneckenprofils und Radius $r_j$ des j-ten Kreisbogens des erzeugenden Schneckenprofils gleich dem Achsabstand a ist, wobei j und j' ganze Zahlen sind, die gemeinsam alle Werte im Bereich 1 bis zur Anzahl der Kreisbögen n beziehungsweise n' durchlaufen,
- der Mittelpunkt des j'-ten Kreisbogens des erzeugten Schneckenprofils einen Abstand vom Mittelpunkt des j-ten Kreisbogens des erzeugenden Schneckenprofils besitzt, der gleich dem Achsabstand a ist, und der Mittelpunkt des j'-ten Kreisbogens des erzeugten Schneckenprofils einen Abstand von dem Drehpunkt des erzeugten Schneckenprofils besitzt, der gleich dem Abstand des Mittelpunkts des j-ten Kreisbogens des erzeugenden Schneckenprofils von dem Drehpunkt des erzeugenden Schneckenprofils ist, und die Verbindungslinie zwischen dem Mittelpunkt des j'-ten Kreisbogens des erzeugten Schneckenprofils und dem Mittelpunkt des j-ten Kreisbogens des erzeugenden Schneckenprofils eine Parallele zu einer Verbindungslinie zwischen dem Drehpunkt des erzeugten Schneckenprofils und dem Drehpunkt des erzeugenden Schneckenprofils ist, wobei j und j' ganze Zahlen sind, die gemeinsam alle Werte im Bereich 1 bis zur Anzahl der Kreisbögen n beziehungsweise n' durchlaufen,
- ein Anfangspunkt des j'-ten Kreisbogens des erzeugten Schneckenprofils in einer Richtung bezogen auf den Mittelpunkt des j'-ten Kreisbogens des erzeugten Schneckenprofils liegt, die entgegengesetzt derjenigen Richtung ist, die ein Anfangspunkt des j-ten Kreisbogens des erzeugenden Schneckenprofils bezogen auf den Mittelpunkt des j-ten Kreisbogens des erzeugenden Schneckenprofils besitzt, wobei j und j' ganze Zahlen sind, die gemeinsam alle Werte im Bereich 1 bis zur Anzahl der Kreisbögen n beziehungsweise n' durchlaufen,
- die Summe der Kammwinkel eines erzeugenden und eines erzeugten Schneckenprofils kleiner ist als

$$2\pi - 4\arccos\left(\frac{a}{2 \cdot ra}\right), \text{ und}$$

- bei achsensymmetrischen Schneckenprofilen keiner der Mittelpunkte der Flankenkreise auf der Senkrechten zur Symmetrieachse des Profils liegt, die durch den Drehpunkt geht.

Die Summe der Kammwinkel eines erzeugenden und eines erzeugten Schneckenprofils ist kleiner als

$$2\pi - 4\arccos\left(\frac{a}{2 \cdot ra}\right),$$ bevorzugt kleiner als $0{,}8\cdot\left(2\pi - 4\arccos\left(\frac{a}{2 \cdot ra}\right)\right),$ besonders bevorzugt kleiner als

$$0{,}6\cdot\left(2\pi - 4\arccos\left(\frac{a}{2 \cdot ra}\right)\right),$$ und am meisten bevorzugt kleiner als $0{,}4\cdot\left(2\pi - 4\arccos\left(\frac{a}{2 \cdot ra}\right)\right).$

Bei erfindungsgemäßen Schneckenelementen setzt sich jeweils ein Querschnittsprofil bevorzugt aus fünf oder mehr Kreisbögen mit einem Radius größer oder gleich Null und kleiner oder gleich a zusammen, wobei die Kreisbögen an ihren Endpunkten tangential ineinander übergehen.

Die Profile erfindungsgemäßer Schneckenelemente können jeweils unsymmetrisch oder symmetrisch bezüglich einer Achse durch den Drehpunkt des jeweiligen Schneckenelements sein. Achsensymmetrische Profile erfindungsgemäßer Schneckenelemente zeichnen sich dadurch aus, dass keiner der Mittelpunkte der Kreisbögen, die den Flankenbereich bilden, auf der Senkrechten zur Symmetrieachse des Profils liegt, die durch den Drehpunkt geht.

Die Profile erfindungsgemäßer Schneckenelemente sind dadurch charakterisiert, dass sie allein mit Winkellineal und Zirkel konstruiert werden können. So wird der tangentiale Übergang zwischen dem j-ten und dem (j+1)-ten Kreisbogen des erzeugenden Schneckenprofils konstruiert, indem um den Endpunkt des j-ten Kreisbogens ein Kreis mit dem Radius $r_{j+1}$ geschlagen wird und der näher zum Drehpunkt des erzeugenden Schneckenprofils gelegene Schnittpunkt dieses Kreises mit der Gerade, die durch den Mittelpunkt und den Endpunkt des j-ten Kreisbogens definiert ist, der Mittelpunkt des (j+1)-ten Kreisbogens ist.

Es empfiehlt sich, das Verfahren zur Erzeugung von Schneckenprofilen auf einem Computer durchzuführen. Die Abmessungen der Schneckenelemente liegen dann in einer Form vor, in der sie einer CAD-Fräsmaschine zur Erzeugung der Schneckenelemente zugeführt werden können.

Der auf den Achsabstand normierte Schneckenaußenradius erfindungsgemäßer Schneckenelemente liegt bevorzugt im Bereich von 0,51 bis 0,7, besonders bevorzugt im Bereich von 0,52 bis 0,66 und ganz besonders bevorzugt im Bereich von 0,57 bis 0,63.

Die erfindungsgemäßen Schneckenelemente können als Förderelemente oder Knetelemente oder Mischelemente ausgebildet sein.

Ein Förderelement zeichnet sich bekanntlich dadurch aus (siehe zum Beispiel [1], Seiten 227 - 248), dass das Schneckenprofil in Achsrichtung kontinuierlich schraubenförmig verdreht und fortgesetzt wird. Je nach Drehrichtung der Wellen wird das Förderelement rechts- oder linksgängig ausgeführt. Rückfördernde Elemente erhält man jeweils durch eine dazu entgegengesetzte Verdrehung. Die Steigung des Förderelements liegt bevorzugt im Bereich des 0,1-fachen bis 10-fachen des Achsabstandes, wobei unter der Steigung die axiale Länge verstanden wird, die für eine vollständige Drehung des Schneckenprofils erforderlich ist, und die axiale Länge eines Förderelements liegt bevorzugt im Bereich des 0,1-fachen bis 10-fachen des Schneckendurchmessers.

Ein Knetelement zeichnet sich bekanntlich dadurch aus (siehe zum Beispiel [1], Seiten 227 - 248), dass das Schneckenprofil in Achsrichtung absatzweise in Form von Knetscheiben fortgeführt wird. Die Anordnung der Knetscheiben kann rechts- oder linksgängig oder neutral erfolgen. Die axiale Länge der Knetscheiben liegt bevorzugt im Bereich des 0,05-fachen bis 10-fachen des Achsabstands. Der axiale Abstand zwischen zwei benachbarten Knetscheiben liegt bevorzugt im Bereich des 0,002-fachen bis 0,1-fachen des Schneckendurchmessers.

Mischelemente werden bekanntlich dadurch gebildet (siehe zum Beispiel [1], Seiten 227 - 248), dass Förderelemente mit Durchbrüchen in den Schneckenkämmen ausgeführt werden. Die Mischelemente können rechts- oder linksgängig sein. Ihre Steigung liegt bevorzugt im Bereich des 0,1-fachen bis 10-fachen des Achsabstandes und die axiale Länge der Elemente liegt bevorzugt im Bereich des 0,1-fachen bis 10-fachen des Achsabstandes. Die Durchbrüche haben bevorzugt die Form einer u- oder v-förmigen Nut, die bevorzugt gegenfördernd oder achsparallel angeordnet ist.

Nachdem sie bevorzugt am Computer unter Berücksichtigung der oben genannten Konstruktionsmerkmale konstruiert worden sind, können die erfindungsgemäßen Schneckenelemente z.B. mit einer Fräsmaschine erzeugt werden. Bevorzugte Materialien zur Erzeugung der Schneckenelemente sind Stähle, insbesondere Nitrierstähle, Chrom-, Werkzeug- und Edelstähle, sowie pulvermetallurgisch hergestellte metallische Verbundwerkstoffe auf Basis von Eisen, Nickel oder Kobalt.

Dem Fachmann ist bekannt, dass exakt abschabende Schneckenprofile nicht direkt in einen Doppelschneckenextruder eingesetzt werden können. Vielmehr sind Spiele zwischen den Schnecken erforderlich. Hierfür sind in [1] auf den Seiten 28 ff verschiedene Strategien beschrieben. Für die Schneckenprofile erfindungsgemäßer Schneckenelemente können Spiele im Bereich von 0,001 bis 0,1 bezogen auf den Durchmesser des Schneckenprofils verwendet werden, bevorzugt 0,002 bis 0,05 und besonders bevorzugt 0,004 bis 0,02. Die Spiele können, wie dem Fachmann bekannt ist, zwischen Schnecke und Gehäuse und zwischen Schnecke und Schnecke unterschiedlich groß oder gleich sein. Die Spiele können auch konstant oder in den angegebenen Grenzen variabel sein. Es ist auch möglich, innerhalb der Spiele ein Schneckenprofil zu verschieben. Mögliche Spielstrategien sind die in [1] auf den Seiten 28 ff beschriebene Möglichkeit der Achsabstand-Vergrößerung, der Längsschnitt-Äquidistanten und der Raumäquidistanten, die alle dem Fachmann bekannt sind. Bei der Achsabstand-Vergrößerung wird ein Schneckenprofil kleineren Durchmessers konstruiert und um den Betrag des Spiels zwischen den Schnecken auseinandergerückt. Bei der Methode der Längsschnitt-Äquidistanten wird die Längsschnitt-Profilkurve (parallel zur Achse) um das halbe Spiel Schnecke-Schnecke nach innen verschoben. Bei der Methode der Raumäquidistanten wird, ausgehend von der Raumkurve, auf der die Schneckenelemente sich abreinigen, das Schneckenelement in der Richtung senkrecht zu den Flächen des exakt abschabenden Profils um das halbe Spiel zwischen Schnecke und Schnecke verkleinert. Bevorzugt wird die Längsschnitt-Äquidistante und die Raumäquidistante, besonders bevorzugt die Raumäquidistante verwendet.

Die Profile erfindungsgemäßer Schneckenelemente lassen sich nach einem der in PCT/EP2009/003549 beschriebenen Verfahren konstruieren.

Gegenstand der vorliegenden Erfindung ist weiterhin die Verwendung der erfindungsgemäßen Schneckenelemente in mehrwelligen Schneckenmaschinen. Bevorzugt werden die erfindungsgemäßen Schneckenelemente in zweiwelligen Schneckenmaschinen eingesetzt. Die Schneckenelemente können in den mehrwelligen Schneckenmaschinen in Form von Knet-, Misch- oder Förderelementen vorliegen. Es ist ebenso möglich, Knet-, Förder-, und Mischelemente in einer Scheckenmaschine miteinander zu kombinieren. Die erfindungsgemäßen Schneckenelemente können auch mit anderen Schneckenelementen, die z.B. nach dem Stand der Technik bekannt sind, kombiniert werden.

Gegenstand der vorliegenden Erfindung ist weiterhin ein Verfahren zur Extrusion plastischer Massen in einem Doppelschnecken- oder Mehrwellenextruder unter Verwendung von erfindungsgemäßen Schneckenelementen, dadurch gekennzeichnet, dass die Summe der Kammwinkel eines Schneckenelementepaares kleiner ist als

$$2\pi - 4\arccos\left(\frac{a}{2 \cdot ra}\right)$$ und bei achsensymmetrischen Schneckenprofilen keiner der Mittelpunkte der Flankenkreise auf der Senkrechten zur Symmetrieachse des Profils liegt, die durch den Drehpunkt geht.

Plastische Massen, die erfindungsgemäß mit hoher Effizienz bei gleichzeitiger Produktschonung extrudiert werden können, sind z.B. Suspensionen, Pasten, Glas, Keramische Massen, Metalle in Form einer Schmelze, Kunststoffe, Kunststoffschmelzen, Polymerlösungen, Elastomer- und Kautschuk-Massen.

Bevorzugt werden Kunststoffe und Polymerlösungen eingesetzt, besonders bevorzugt thermoplastische Polymere. Als thermoplastisches Polymer wird bevorzugt wenigstens eines aus der Reihe Polycarbonat, Polyamid, Polyester, insbesondere Polybutylenterephthalat und Polyethylenterephthalat, sowie Polyether, thermoplastisches Polyurethan, Polyacetal, Fluorpolymer, insbesondere Polyvinylidenfluorid, sowie Polyethersulfone, Polyolefin, insbesondere Polyethylen und Polypropylen, sowie Polyimid, Polyacrylat, insbesondere Poly(methyl)methacrylat, sowie Polyphenylenoxid, Polyphenylensulfid, Polyetherketon, Polyaryletherketon, Styrolpolymerisate, insbesondere Polystyrol und Styrolcopolymere, insbesondere Styrolacrylnitrilcopolymer und Acrylnitrilbutadienstyrolblockcopolymere sowie Polyvinylchlorid eingesetzt. Ebenso bevorzugt eingesetzt werden so genannte Blends aus den aufgeführten Kunststoffen, worunter der Fachmann eine Kombination aus zwei oder mehreren Kunststoffen versteht.

Weitere bevorzugte Einsatzmaterialien sind Elastomere. Als Elastomer wird bevorzugt wenigstens einer aus der Reihe Styrol-Butadien-Kautschuk, Naturkautschuk, Butatdien-Kautschuk, Isopren-Kautschuk, Ethylen-Propylen-Dien-Kautschuk, Ethylen-Propylen-Kautschuk, Butadien-Acrylnitril-Kautschuk, hydrierter Nitrilkautschuk, Butylkautschuk, Halobutylkautschuk, ChloroprenKautschuk, Ethylen-Vinylacetat-Kautschuk, Polyurethan-Kautschuk, Thermoplastisches Polyurethan, Guttapercha, Arylatkautschuk, Fluorkautschuk, Siliconkautschuk, Sulfidkautschuk, Chlorsulfonyl-Polyethylen-Kautschuk eingesetzt. Eine Kombination von zwei oder mehreren der aufgeführten Kautschuke, oder eine Kombination aus einem oder mehreren Kautschuk mit einem oder mehreren Kunststoffen ist natürlich auch möglich.

Diese Thermoplaste und Elastomere können in reiner Form oder als Mischungen mit Füll- und Verstärkungsstoffen, wie insbesondere Glasfasern, als Mischungen untereinander oder mit anderen Polymeren oder als Mischungen mit üblichen Polymeradditiven eingesetzt werden.

In einer bevorzugten Ausführungsform werden den plastischen Massen, insbesondere den Polymerschmelzen und Mischungen von Polymerschmelzen Additive beigemengt. Diese können als Feststoffe, Flüssigkeiten oder Lösungen gemeinsam mit dem Polymer in den Extruder gegeben werden oder aber es wird wenigstens ein Teil der Additive oder alle Additive dem Extruder über einen Seitenstrom zugeführt.

Additive können einem Polymer vielfältige Eigenschaften verleihen. Dies können beispielsweise Farbmittel, Pigmente, Verarbeitungshilfsmittel, Füllstoffe, Antioxidantien, Verstärkungsstoffe, UV-Absorber und Lichtstabilisatoren, Metalldesaktivatoren, Peroxidfänger, basische Stabilisatoren, Keimbildner, als Stabilisatoren oder Antioxidatien wirksame Benzofurane und Indolinone, Formtrennmittel, flammhemmende Additive, antistatische Mittel, Färbemittel und Schmelzestabilisatoren sein. Beispielhaft für Füll- und Verstärkungsstoffe sind Ruß, Glasfaser, Ton, Glimmer, Graphitfaser, Titandioxid, Kohlenstofffasern, Kohlenstoffnanoröhrchen, ionische Flüssigkeiten und Naturfasern.

Die Erfindung wird nachstehend anhand der Figuren beispielhaft näher erläutert ohne sie jedoch auf diese zu beschränken.

In den Figuren wird die folgende Nomenklatur verwendet:

- Alle Größenangaben sind auf den Achsabstand a normiert. Die normierten Größen werden mit Großbuchstaben bezeichnet. Beispiel: Normierter Außenradius: RA = ra / a.
- Winkel werden im Bogenmaß angegeben.
- Mx und My sind die x- und y-Koordinaten des Kreismittelpunkts eines profilerzeugenden Kreisbogens in einem cartesischen Koordinatensystem, dessen Ursprung sich im Drehpunkt des Schneckenprofils befindet.
- Der Kreisbogen mit dem Radius r = ra wird mit "1" bezeichnet. Er definiert die Kontur des Schneckenkamms.
- Der Kreisbogen mit dem Radius r = ri wird mit "1'" bezeichnet. Er definiert die Kontur des Nutbereiches des Schneckenprofils.
- Die Kreisbögen "2" und "2'", "3" und "3'" usw. definieren die Flanke des Schneckenprofils.
- R ist der auf den Achsabstand a normierte Radius und $\alpha$ der Bogenwinkel des Kreisbogens.
- Weiterhin bedeuten RG = normierter Gehäuseradius, RV = normierter virtueller Gehäuseradius, RA = normierter Außenradius des exakt abschabenden Profils, RF = normierter Außenradius der zu fertigenden Schnecke, S = normiertes Spiel der Schnecken untereinander (Spalt), D = normiertes Spiel der Schnecke zum Gehäuse, VPR = normierter Betrag der Profilverschiebung, VPW Winkel der Profilverschiebung im Bogenmaß, VLR = normierter Betrag der Verschiebung der linken Welle, VLW = Winkel der Verschiebung der linken Welle, VRR = normierter Betrag der Verschiebung der rechten Welle, VRW = Winkel der Verschiebung der rechten Welle.

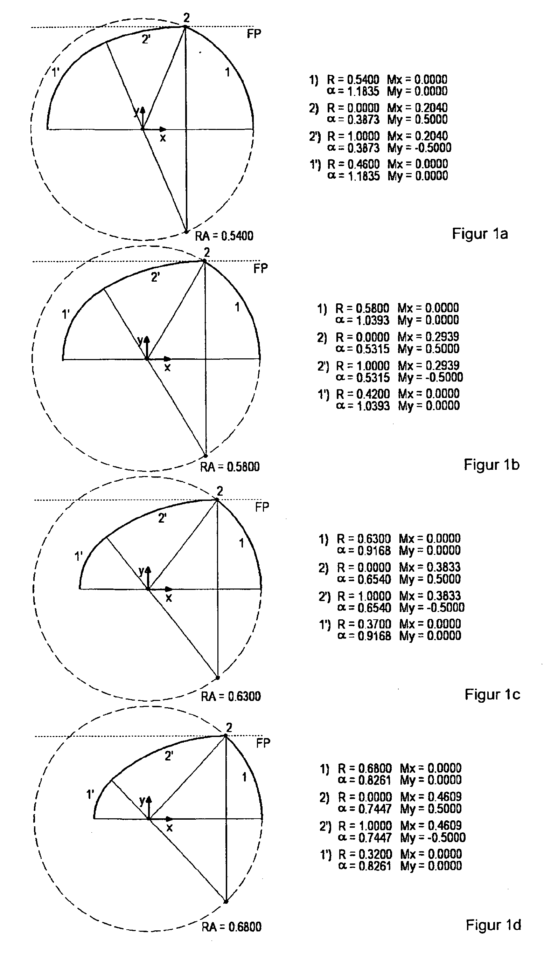

Figur 1a bis 1d zeigen jeweils einen Teil von eingängigen selbstreinigenden Schneckenprofilen nach dem Stand der Technik im Querschnitt, wie sie in [1] beschrieben werden.

Der Koordinatenursprung markiert den Drehpunkt. Die Kreisbögen 1, 2, 2' und 1' bilden eine Hälfte des Schneckenprofils. Die andere Hälfte ergibt sich durch Spiegelung des gezeigten Profils an der waagerechten Geraden durch den Drehpunkt. Das nicht gezeigte Schneckenprofil der zweiten Welle ergibt sich durch Verschiebung des gezeigten und gespiegelten Schneckenprofils um den Betrag A (normierter Achsabstand) entlang der waagerechten Geraden durch den Drehpunkt. Der Kreisbogen 1' ist zudem der erzeugte Kreisbogen zum erzeugenden Kreisbogen 1, so wie der Kreisbogen 2' der erzeugte Kreisbogen zu dem erzeugenden Kreisbogen 2 ist.

Die Mittelpunkte der Kreisbögen werden durch kleine Kreise dargestellt. Die Mittelpunkte der Kreisbögen sind mit dünnen, durchgezogenen Linien sowohl mit dem Anfangspunkt als auch mit dem Endpunkt des dazugehörigen Kreisbogens verbunden. Außerhalb des Schneckenprofils ist der Schneckenaußenradius durch eine dünne, gestrichelte Linie gekennzeichnet.

In den Figuren 1a bis 1d wird der normierte Außenradius RA sukzessive vergrößert und man gelangt von einem flachgeschnittenen Profil (Fig. 1a) zu einem tiefgeschnittenen Profil (Fig. 1d).

Der Kreisbogen "1" repräsentiert jeweils die Hälfte des Schneckenkamms und der dazugehörige Winkel $\alpha_1$ den halben Kammwinkel. Bei einer Konstruktion nach [1] hat $\alpha_1$ die Größe $\frac{\pi}{2} - \arccos\left(\frac{a}{2 \cdot ra}\right)$ und die Summe der Kammwinkel beider Schneckenwellen ergibt sich zu $2\pi - 4\arccos\left(\frac{a}{ra}\right)$.

In Figur 1c beträgt der halbe Kammwinkel beispielsweise 52,5 Grad; die Summe über alle Kammwinkel beider Schneckenwellen ergibt sich zu 210 Grad.

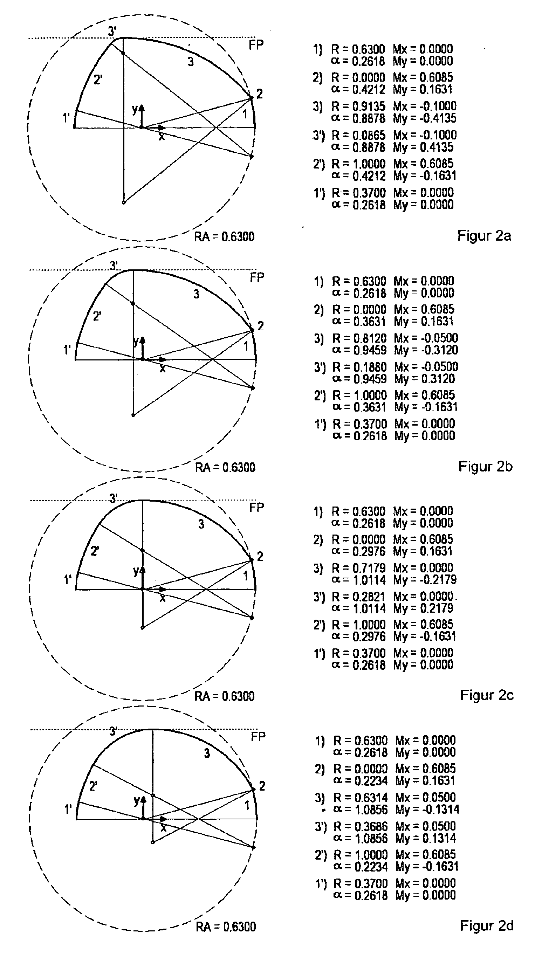

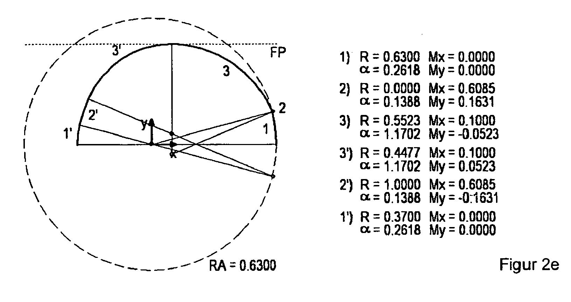

Figuren 2a, 2b, 2d und 2e zeigen im Querschnitt beispielhaft Teilprofile von erfindungsgemäßen Schneckenprofilen mit reduziertem Kammwinkel. Achsensymmetrische Gesamtprofile lassen sich durch Spiegelung der gezeigten Teilprofile an der waagerechten Geraden durch den Drehpunkt erzeugen. Das Profil der zweiten Schneckenwelle lässt sich aus dem gezeigten und gespiegelten durch Verschiebung entlang der waagerechten Gerade durch den Drehmittelpunkt um einen Betrag A erzeugen. Der Kreisbogen 1' ist zudem der erzeugte Kreisbogen zum erzeugenden Kreisbogen 1, so wie die Kreisbögen 2' und 3' erzeugte Kreisbögen zu den erzeugenden Kreisbögen 2 und 3 sind.

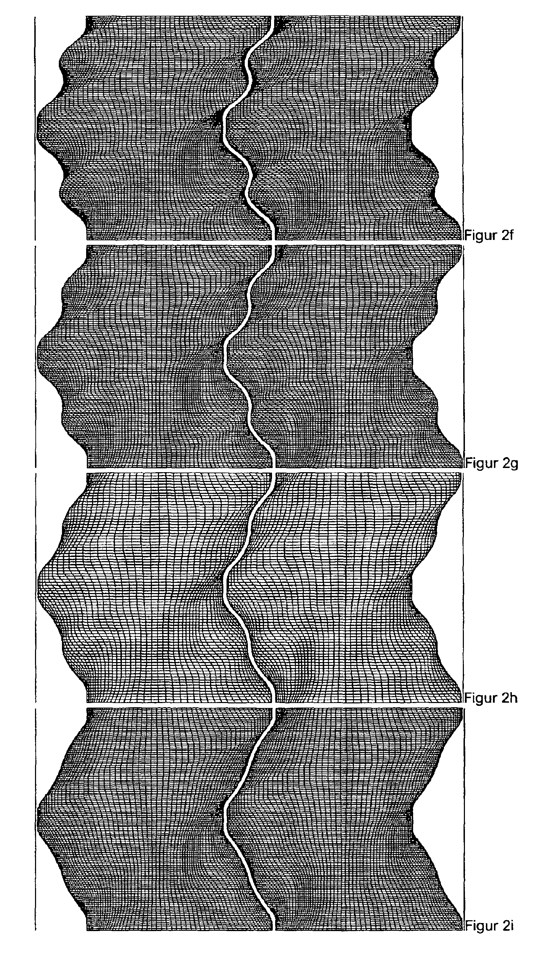

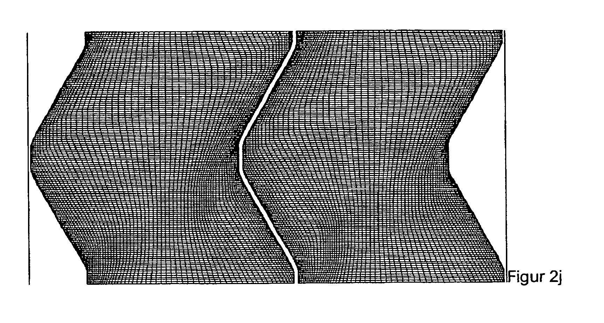

Das Verhältnis RA hat den Wert 0,63 wie in Figur 1c, der halbe Kammwinkel $\alpha_1$ wurde jedoch auf 15 Grad und die Summe über die Kammwinkel beider Schneckenwellen entsprechend auf 60 Grad reduziert. In den Figuren 2a bis 2d wurde jeweils der Radius $R_2 = 0$ gewählt, so dass am Übergang zwischen Schneckenkamm und Flanke eine Kante entsteht und der zu $R_2$ korrespondierende Radius $R_{2'}$ den maximalen Wert $R_{2'} = A$ annimmt. Der Radius $R_3$ wurde in den Figuren zwischen $R_3 = 0,9135$ (Figur 2a) und $R_3 = 0,5523$ (Figur 2e) variiert. Die Figuren 2a bis 2e verdeutlichen die Variationsmöglichkeiten der erfindungsgemäßen Konstruktion, die bei einem gegebenen Kammwinkel und gegebenem Verhältnis RA die Konstruktion von kantigen Profilen (Figur 2a) bis hin zu stark abgerundeten Profilen (Figur 2e) einschließt. Figur 2c stellt eine Konstruktion gemäß der Offenbarung in US 3 900 187 dar, wo bei einem gegebenen Kammwinkel und gegebenem Verhältnis RA keine weiteren Variationsmöglichkeiten bestehen. Nach US 3 900 187 liegt der Mittelpunkt des Flankenkreises, der an den Schneckenkamm anschließt (in Figur 2 der Kreis "3") auf der Senkrechten zur Symmetrieachse des Profils, die durch den Drehpunkt geht (in Figur 2 die y-Koordinatenachse). Man beachte, wie der Einzugswinkel zwischen den Tangenten an die Flanke des Schneckenprofils und an den Gehäusekreis am Punkt des Übergangs zwischen Schneckenkamm und Flanke durch die Variation von $R_3$ in den Figuren 2a bis 2e beeinflusst wird. Je nach den Anforderungen des Prozesses kann man erfindungsgemäß wählen zwischen einerseits einer Konstruktion mit einem sehr spitzen Winkel, wie sie in Figur 2e gezeigt wird, die dazu führt, dass das zu verarbeitende Material durch die Rotation der Schneckenwelle in hohem Maße in den Spalt zwischen Schneckenkamm und Gehäusewand eingezogen wird, und Konstruktionen mit einem größeren Einzugswinkel andererseits, wo die Schneckenflanke das Material in höherem Maße vor sich her schiebt.

Die Figuren 2f bis 2j zeigen zur Veranschaulichung die Längsansicht von Schneckenwellen, die aus den Schneckenprofilen 2a bis 2e aufgebaut sind und als Fördergewinde ausgebildet sind.

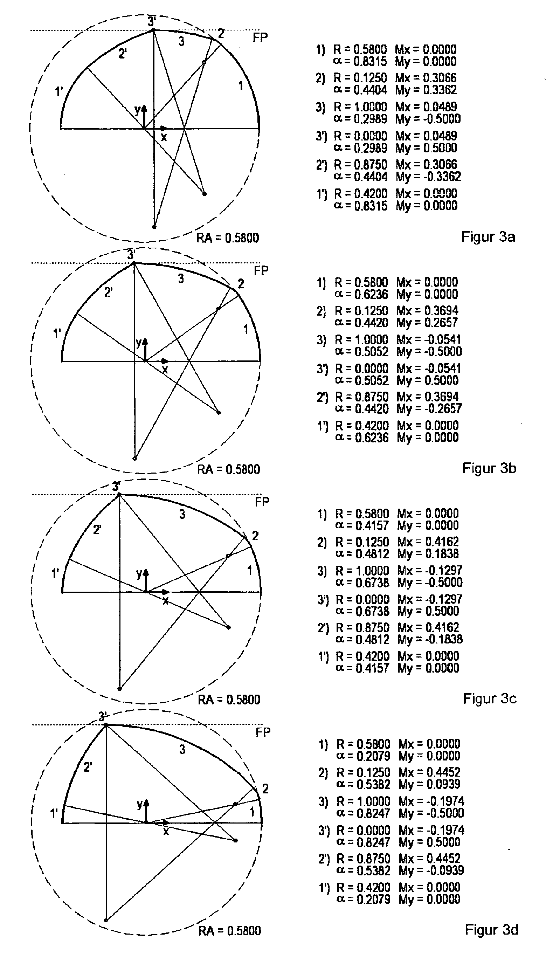

Die Figuren 3a bis 3d zeigen beispielhaft ein Teilprofil eines erfindungsgemäßen erzeugenden Schneckenprofils mit RA=0.58 unter Variation des halben Kammwinkels $\alpha_1$ von 47,6 Grad in Figur 3a bis 11,9 Grad in Figur 3d. Der Übergang vom Schneckenkamm zur Flanke ist in den Figuren 3a bis 3d durch die Wahl eines von Null verschiedenen Radius $R_2$ abgerundet. Der Radius $R_3$ wurde dagegen mit $R_3$ = A maximal gewählt, so dass der korrespondierende Radius $R_3$, verschwindet. Dadurch entsteht in der Flanke des Schneckenprofils eine Kante, die jedoch mit einem größeren Abstand zum Gehäuse rotiert. Die Figuren 3a bis 3d zeigen die Variationsmöglichkeiten bei der Ausprägung dieser Kante: Bei Wahl eines kleinen Kammwinkels $\alpha_1$ und eines großen Flankenwinkels $\alpha_3$ ist die Kante stark ausgeprägt (Figur 3d), bei Wahl eines großen Kammwinkels $\alpha_1$ und kleinen Flankenwinkels $\alpha_3$ ist sie nur wenig ausgeprägt (Figur 3a).

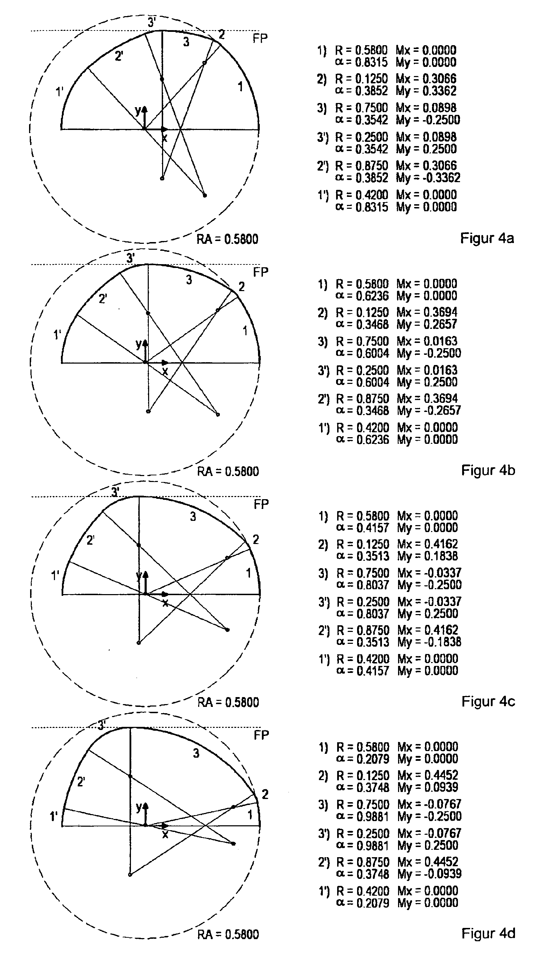

Die Figuren 4a bis 4d zeigen Teilprofile erfindungsgemäßer Schneckenprofile ohne Knicke. Der halbe Kammwinkel $\alpha_1$ wurde analog zu den Figuren 3a bis 3d von 47,6 Grad in Figur 4a bis 11,9 Grad in Figur 4d variiert. Die Flankenradien wurden mit $R_2$ = 0,125 und $R_3$ = 0,75 gewählt. Die Variation der Kammbreite erzeugt hier ein Spektrum von Schneckenprofilen, das von Profilen mit ausgeprägtem Hoch- und Niedrigscherbereich (Figur 4a) bis zu Profilen mit einer homogenen Verteilung der Schergeschwindigkeit über den Umfang des Profils (Figur 4d) reicht.

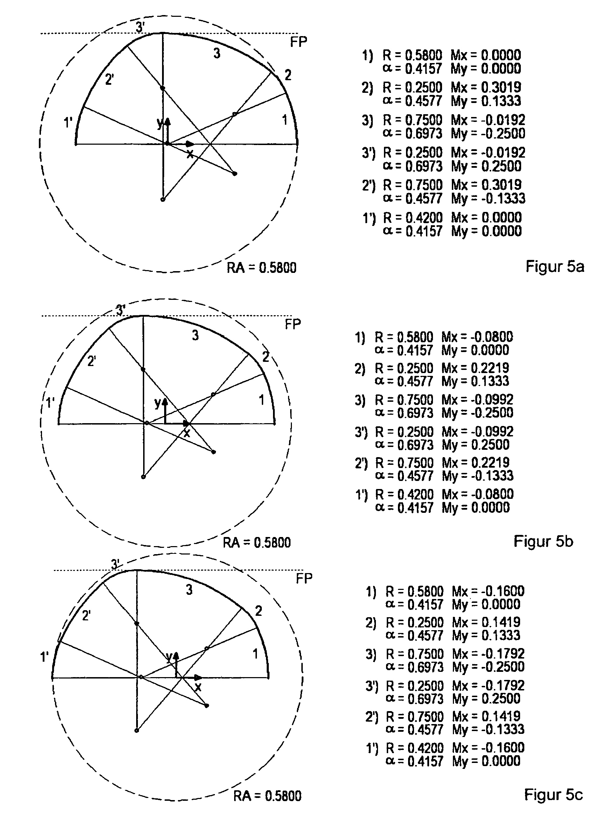

Die Figuren 5a bis 5c zeigen beispielhaft die Erzeugung von Paaren selbstreinigender Schneckenwellen durch Verschiebung erfindungsgemäßer Schneckenprofile in Richtung der x-Achse. Wenn die Drehpunkte beider Wellen auf der x-Achse liegen, dürfen die Profile unter ortsfester Beibehaltung der Drehpunkte innerhalb des Gehäuseradius in Richtung der x-Achse verschoben werden. Dabei bleibt die vollständige gegenseitige Abreinigung der Schneckenprofile erhalten. Figur 5a zeigt das Ausgangsprofil mit einem halben Kammwinkel $\alpha_1$ von 23,8°, und Flankenradien von $R_2$ = 0,25, sowie $R_3$ = 0,75. In Figur 5b ist das Profil in Richtung der negativen x-Achse verschoben. Die Gehäusebohrung wird jetzt mit einem stark vergrößerten Spalt abgereinigt. Die Zone hoher Scherung zwischen Schneckenkamm und Gehäuse ist dadurch nicht mehr existent. Figur 5c zeigt die maximal mögliche Verschiebung des Profils. Der Schneckengrund bzw. die Nut des Ursprungsprofils hat jetzt die Funktion des Schneckenkamms übernommen und umgekehrt.

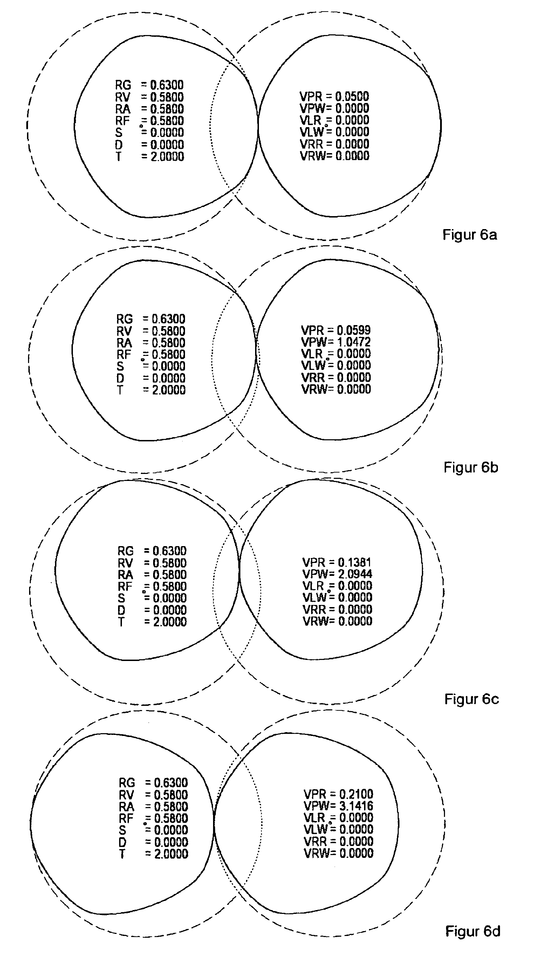

Eine besondere Ausführungsform erfindungsgemäßer Schneckenelemente ist beispielhaft in den Figuren 6a bis 6d dargestellt.

Das gezeigte Schneckenprofil lässt sich aus dem in Figur 5a gezeigten Teilprofil durch Spiegelung an der waagerechten Geraden durch den Drehpunkt erzeugen. Das Profil der zweiten Welle entspricht dem um den Betrag A entlang der Symmetrieachse verschobenem Profil der ersten Welle.

Diese Ausführungsform ist dadurch gekennzeichnet, dass die Gehäusebohrungen mit einem normierten Radius RG = 0,63 ausgeführt sind, der größer ist als der Außenradius RA = 0,58 der Schneckenprofile. Die Schneckenprofile sind paarweise gegenüber den Mittelpunkten der Gehäusebohrungen verschoben. Die Drehpunkte (dargestellt durch kleine Kreise) verbleiben jedoch in den Mitten der Gehäusebohrungen. Auf diese Weise werden exzentrisch rotierenden Schneckenelemente erzeugt. Die Verschiebung kann innerhalb der Gehäusebohrungen beliebig gewählt werden. In den Figuren 6a bis 6d sind beispielhaft vier Verschiebungen für ein und dasselbe Schneckenprofil gezeigt, bei denen jeweils ein anderer Radius der Profilkontur die Gehäusebohrung abreinigt.

Bis hierher wurden exakt abschabende Schneckenprofile behandelt. Bei technisch ausgeführten Maschinen ist es aber erforderlich, von der exakt abschabenden Geometrie insofern abzuweichen, als exakt definierte Spalte bei der Abreinigung eingehalten werden. Dies ist notwendig, um metallisches "Fressen" zu verhindern, um Fertigungstoleranzen auszugleichen und um übermäßige Energiedissipation in den Spalten zu vermeiden. Zur Erzeugung gleichmäßiger Spalte sind verschiedene Strategien möglich. Am weitesten verbreitet ist die Erzeugung von Spalten, die in einem Längsschnitt durch die Maschine äquidistant sind. Die Vorgehensweise zur Erzeugung der entsprechenden Schneckenprofile wurde in [1] auf den Seiten 103ff dargestellt.

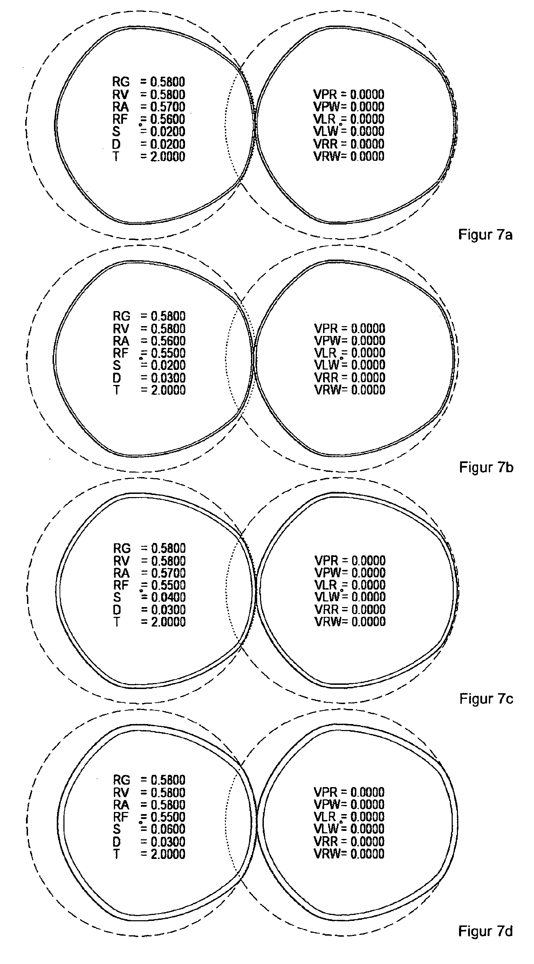

Figuren 7a bis 7d zeigen Beispiele von Profilen erfindungsgemäßer Schneckenelemente mit Spalten (Spielen). In Figur 7a wurde der auf den Achsabstand normierte Spalt S bei der Abreinigung der Schnecken untereinander gleich groß gewählt wie der normierte Spalt D bei der Abreinigung des Gehäuses. In Figur 7b ist der Spalt S kleiner als D und in Figur 7c und 7d ist umgekehrt D kleiner als S.

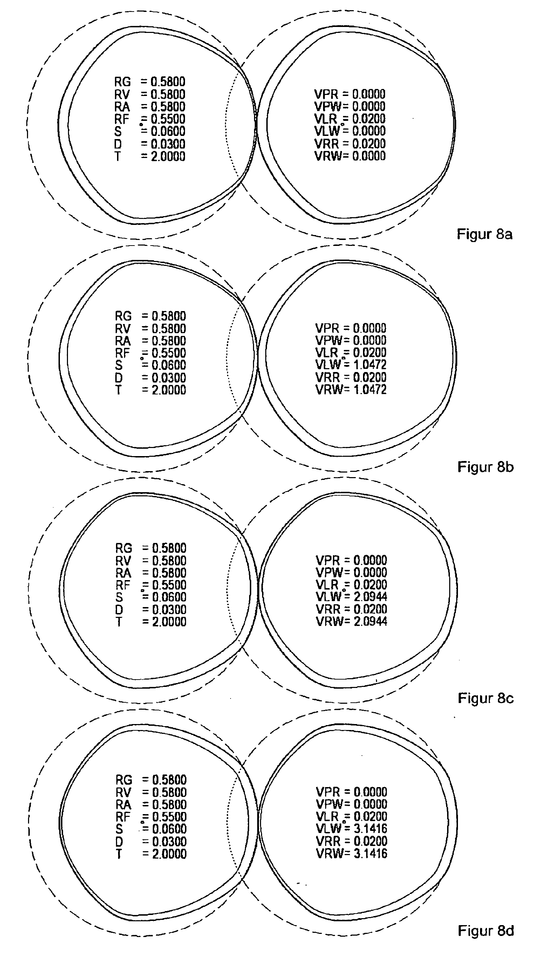

Mit den Figuren 8a bis 8d wird aufgezeigt, dass erfindungsgemäße exzentrische Profile auch dadurch erhalten werden, dass man ein Schneckenprofil mit Spalten konstruiert und anschließend die Profile innerhalb der Spalte verschiebt. Die Profile von Figuren 8a bis 8d sind identisch mit dem Profil aus Abbildung 7d. Die Verschiebung erfolgt in Bezug zu einer Geraden durch die Drehpunkte der Schneckenelemente in Figur 8a im Winkel von 0°, in Figur 8b im Winkel von 60°, in Figur 8c im Winkel von 120° und in Figur 8d im Winkel von 180°.

Die Figuren 8a bis 8d zeigen Beispiele, in denen beide Wellen mit demselben Verschiebevektor verschoben werden. Grundsätzlich ist es auch möglich, beide Wellen innerhalb der Spiele mit einem unterschiedlichen Vektor zu verschieben. Man erhält dann Profile, die sich mit einem Spalt abreinigen, der während einer Umdrehung der Wellen variiert.

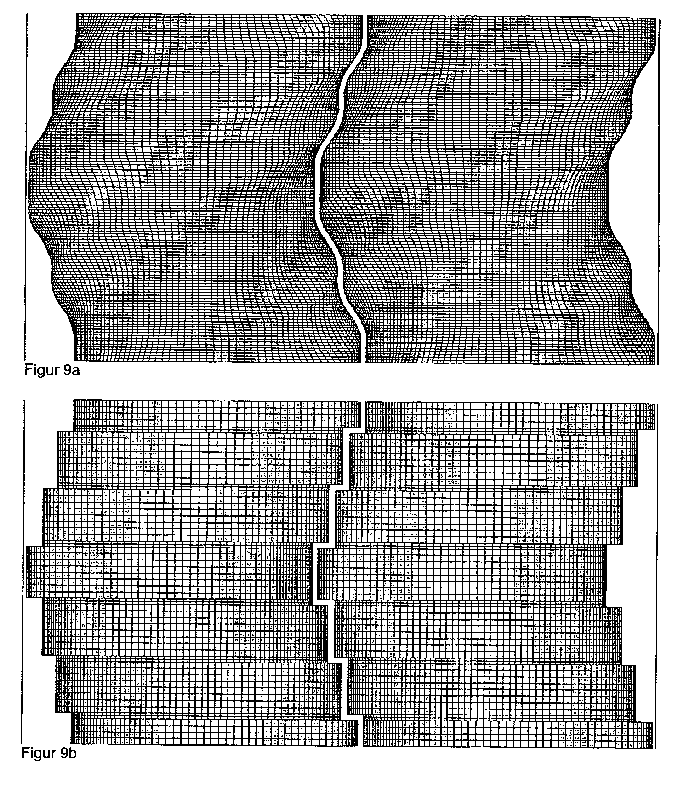

Die Förderwirkung eines Profilpaares kommt bekanntlich dadurch zustande, dass man die Profile in Achsrichtung kontinuierlich schraubenförmig verdreht. Auf diese Weise entsteht ein Fördergewinde. Figur 9a zeigt beispielhaft die Längsansicht eines erfindungsgemäßen Fördergewindes. Knetelemente mit erhöhter Dispergierleistung gegenüber dem Fördergewinde erhält man, indem man prismatische Scheiben aus selbstreinigenden Profilen versetzt zueinander auf der Achse anordnet. Ein Beispiel für ein Knetelement mit sieben Knetscheiben, die mit einem Versatzwinkel von 60° auf der Achse angeordnet sind, zeigt Figur 9b.

In den Figuren sind ausnahmslos symmetrische Schneckenprofile gezeigt. Es ist jedoch auch möglich asymmetrische Schneckenprofile zu erzeugen. Dies ist in PCT/EP2009/003549 ausführlich dargelegt. Zum Beispiel ist es möglich, die in den Figuren 2a und 2b gezeigten Hälften eines Schneckenprofils zu einem asymmetrischen Schneckenprofil zusammenzusetzen, indem zum Beispiel das in Fig. 2b gezeigte Profil an der x-Achse gespiegelt wird und der gespiegelte Teil den fehlenden Abschnitt des Profils in Fig. 2a ergänzt.

In den Figuren werden maximal 12 Kreisbögen zur Beschreibung eines erzeugenden oder eines erzeugten Schneckenprofils verwendet. Die erfindungsgemäßen Verfahren sind jedoch keinesfalls auf maximal 12 Kreisbögen beschränkt. Vielmehr können beliebig viele Kreisbögen zur Erzeugung von Schneckenprofilen herangezogen werden. Insbesondere ist es dadurch möglich, Schneckenprofile, die nicht aus Kreisbögen aufgebaut und damit nicht selbstreinigend sind, durch eine ausreichend hohe Anzahl an Kreisbögen mit einer gewünschten Genauigkeit zu approximieren.

Aus dem Querschnittsprofil einer Schneckenwelle lässt sich das Längsschnittprofil berechnen. Bevorzugt wird jeder Kreisbogen eines Schneckenprofils genutzt, um mittels einer expliziten Funktion einen zu diesem Kreisbogen gehörigen Teil des Längsschnitts zu berechnen.

Zur Berechnung des Abstandes s eines Punktes eines Kreisbogens eines Schneckenprofils von der Drehachse wird in einem ersten Schritt der Schnittpunkt $(S_x, S_y)$ einer Gerade g, dadurch charakterisiert, dass die besagte Gerade in der Ebene des Schneckenprofils liegt, durch den Drehpunkt des Schneckenprofils führt und die Orientierung der Gerade durch den Winkel $\varphi$ gegeben ist, mit einem Kreisbogen kb, charakterisiert durch seinen Radius r und die Lage seines Mittelpunktes $(M_x, M_y)$, bestimmt. In einem zweiten Schritt wird der Abstand s des Schnittpunktes $(S_x, S_y)$ vom Drehpunkt des Schneckenprofils berechnet. Die Berechnung eines Schnittpunkts einer Geraden mit einem Kreisbogen lässt sich durch eine explizite Funktion darstellen. Gleiches gilt für die Abstandsberechnung. Für den Abstand gilt daher $s=s(\varphi, r, M_x, M_y)$. Der Winkel $\varphi$ lässt sich bei bekannter Steigung t eines Schneckenelements über $\varphi/2\pi*t$ in eine axiale Position $z\_ax$ umrechnen, so dass für den Abstand $s=s(z\_ax, r, M_x, M_y)=s(\varphi/2\pi*t, r, M_x, M_y)$ gilt. Die Funktion $s(z\_ax, r, M_x, M_y)$ beschreibt den gesuchten Längsschnitt für einen Kreisbogen des Schneckenprofils.

Im Folgenden wird beispielhaft ein Verfahren beschrieben, mit dem die Profile erfindungsgemäßer Schneckenelemente konstruiert werden können.

Das Verfahren zur Erzeugung dicht kämmender, selbstreinigender, gleichsinnig drehender Schneckenprofile mit einem wählbaren Achsabstand a zwischen den Drehachsen eines erzeugenden und eines erzeugten Schneckenprofils, ist dadurch gekennzeichnet, dass das erzeugende Schneckenprofil aus n Kreisbögen und das erzeugte Schneckenprofil aus n' Kreisbögen gebildet wird, wobei

- das erzeugende Schneckenprofil und das erzeugte Schneckenprofil in einer Ebene liegen,
- die Drehachse des erzeugenden Schneckenprofils und die Drehachse des erzeugten Schneckenprofils jeweils senkrecht auf der besagten Ebene der Schneckenprofile stehen, wobei der Schnittpunkt der Drehachse des erzeugenden Schneckenprofils mit der besagten Ebene als Drehpunkt des erzeugenden Schneckenprofils und der Schnittpunkt der Drehachse des erzeugten Schneckenprofils mit der besagten Ebene als Drehpunkt des erzeugten Schneckenprofils bezeichnet wird,
- die Anzahl der Kreisbögen n des erzeugenden Schneckenprofils gewählt wird, wobei n eine ganze Zahl ist, die größer oder gleich 1 ist,
- ein Außenradius ra des erzeugenden Schneckenprofils gewählt wird, wobei ra einen Wert annehmen kann, der größer als 0 (ra>0) und kleiner oder gleich dem Achsabstand (ra≤a) ist,
- ein Kernradius ri des erzeugenden Schneckenprofils gewählt wird, wobei ri einen Wert annehmen kann, der größer oder gleich 0 (ri≥0) und kleiner oder gleich ra (ri≤ra) ist,
- die Kreisbögen des erzeugenden Schneckenprofils im oder gegen den Uhrzeigersinn um die Drehachse des erzeugenden Schneckenprofils entsprechend den nachfolgenden Anordnungsregeln derart angeordnet werden, dass:

  o alle Kreisbögen des erzeugenden Schneckenprofils derart tangential ineinander übergehen, dass sich ein geschlossenes, konvexes Schneckenprofil ergibt, wobei ein Kreisbogen, dessen Radius gleich 0 ist, vorzugsweise wie ein Kreisbogen behandelt wird, dessen Radius gleich eps ist, wobei eps eine sehr kleine positive reelle Zahl ist, die gegen 0 strebt (eps<<1, eps→0),

o jeder der Kreisbögen des erzeugenden Schneckenprofils innerhalb oder auf den Grenzen eines Kreisrings mit dem Außenradius ra und dem Kernradius ri liegt, dessen Mittelpunkt auf dem Drehpunkt des erzeugenden Schneckenprofils liegt,

o mindestens einer der Kreisbögen des erzeugenden Schneckenprofils den Außenradius ra des erzeugenden Schneckenprofils berührt,

o mindestens einer der Kreisbögen des erzeugenden Schneckenprofils den Kernradius ri des erzeugenden Schneckenprofils berührt,

- die Größe eines ersten Kreisbogens des erzeugenden Schneckenprofils, die durch einen Winkel $\alpha_1$ und einen Radius $r_1$ festgelegt ist, derart gewählt wird, dass der Winkel $\alpha_1$ im Bogenmaß größer oder gleich 0 und kleiner oder gleich $2\pi$ ist, wobei unter die Kreiszahl zu verstehen ist ($\pi\approx3,14159$), und der Radius $r_1$ größer oder gleich 0 und kleiner oder gleich dem Achsabstand a ist, und die Position dieses ersten Kreisbogens des erzeugenden Schneckenprofils, die sich durch das Positionieren von zwei verschiedenen Punkten dieses ersten Kreisbogens ergibt, entsprechend den besagten Anordnungsregeln festgelegt wird, wobei ein erster zu positionierender Punkt dieses ersten Kreisbogens bevorzugt ein zu diesem ersten Kreisbogen zugehörender Anfangspunkt ist und wobei ein zweiter zu positionierender Punkt dieses ersten Kreisbogens bevorzugt der zu diesem ersten Kreisbogen zugehörende Mittelpunkt ist,

- die Größen von weiteren n-2 Kreisbögen des erzeugenden Schneckenprofils, die durch die Winkel $\alpha_2$, ..., $\alpha_{n-1}$ und die Radien $r_2$, ..., $r_{n-1}$ festgelegt sind, derart gewählt werden, dass die Winkel $\alpha_2$, ..., $\alpha_{n-1}$ im Bogenmaß größer oder gleich 0 und kleiner oder gleich $2\pi$ sind und die Radien $r_2$, ..., $r_{n-1}$ größer oder gleich 0 und kleiner oder gleich dem Achsabstand a sind, und die Positionen dieser weiteren n-2 Kreisbögen des erzeugenden Schneckenprofils entsprechend den besagten Anordnungsregeln festgelegt sind,

- die Größe eines letzten Kreisbogens des erzeugenden Schneckenprofils, die durch einen Winkel $\alpha_n$ und einen Radius $r_n$ festgelegt ist, dadurch gegeben ist, dass die Summe der n Winkel der n Kreisbögen des erzeugenden Schneckenprofils im Bogenmaß gleich $2\pi$ ist, wobei der Winkel $_n$ im Bogenmaß größer oder gleich 0 und kleiner oder gleich $2\pi$ ist, und der Radius $r_n$ das erzeugende Schneckenprofil schließt, wobei der Radius $r_n$ größer oder gleich 0 und kleiner oder gleich dem Achsabstand a ist, und die Position dieses letzten Kreisbogens des erzeugenden Schneckenprofils entsprechend den besagten Anordnungsregeln festgelegt ist,

- sich die n' Kreisbögen des erzeugten Schneckenprofils aus den n Kreisbögen des erzeugenden Schneckenprofils dadurch ergeben, dass

o die Anzahl der Kreisbögen n' des erzeugten Schneckenprofils gleich der Anzahl der Kreisbögen n des erzeugenden Schneckenprofils ist, wobei n' eine ganze Zahl ist,

o der Außenradius ra' des erzeugten Schneckenprofils gleich der Differenz des Achsabstandes minus des Kernradius ri des erzeugenden Schneckenprofils ist (ra'=a-ri),

o der Kernradius ri' des erzeugten Schneckenprofils gleich der Differenz des Achsabstandes minus des Außenradius ra des erzeugenden Schneckenprofils ist (ri'=a-ra),

o der Winkel $\alpha_{i'}$ des i'-ten Kreisbogens des erzeugten Schneckenprofils gleich dem Winkel $\alpha_i$ des i-ten Kreisbogens des erzeugenden Schneckenprofils ist, wobei i und i' ganze Zahlen sind, die gemeinsam alle Werte im Bereich von 1 bis zur Anzahl der Kreisbögen n beziehungsweise n' durchlaufen ($\alpha_{1'}=\alpha_1$, ~ ....,$\alpha_{n'}=\alpha_n$),

o die Summe des Radius $r_{i'}$ des i'-ten Kreisbogens des erzeugten Schneckenprofils und des Radius $r_i$ des i-ten Kreisbogens des erzeugenden Schneckenprofils gleich dem Achsabstand a ist, wobei i und i' ganze Zahlen sind, die gemeinsam alle Werte im Bereich 1 bis zur Anzahl der Kreisbögen n beziehungsweise n' durchlaufen ($r_{1'}+r_1=a$, ..., $r_{n'}+r_n=a$),

o der Mittelpunkt des i'-ten Kreisbogens des erzeugten Schneckenprofils einen Abstand von dem Mittelpunkt des i-ten Kreisbogens des erzeugenden Schneckenprofils besitzt, der gleich dem Achsabstand a ist, und der Mittelpunkt des i'-ten Kreisbogens des erzeugten Schneckenprofils einen Abstand von dem Drehpunkt des erzeugten Schneckenprofils besitzt, der gleich dem Abstand des Mittelpunkts des i-ten Kreisbogens des erzeugenden Schneckenprofils von dem Drehpunkt des erzeugenden Schneckenprofils ist, und die Verbindungslinie zwischen dem Mittelpunkt des i'-ten Kreisbogens des erzeugten Schneckenprofils und dem Mittelpunkt des i-ten Kreisbogens des erzeugenden Schneckenprofils eine Parallele zu einer Verbindungslinie zwischen dem Drehpunkt des erzeugten Schneckenprofils und dem Drehpunkt des erzeugenden Schneckenprofils ist, wobei i und i' ganze Zahlen sind, die gemeinsam alle Werte im Bereich 1 bis zur Anzahl der Kreisbögen n beziehungsweise n' durchlaufen (i'=i),

o ein Anfangspunkt des i'-ten Kreisbogens des erzeugten Schneckenprofils in einer Richtung bezogen auf den Mittelpunkt des i'-ten Kreisbogens des erzeugten Schneckenprofils liegt, die entgegengesetzt derjenigen Richtung ist, die ein Anfangspunkt des i-ten Kreisbogens des erzeugenden Schneckenprofils bezogen auf den Mittelpunkt des i-ten Kreisbogens des erzeugenden Schneckenprofils besitzt, wobei i und i' ganze Zahlen sind, die gemeinsam alle Werte im Bereich 1 bis zur Anzahl der Kreisbögen n beziehungsweise n' durchlaufen (i'=i).

Erfindungsgemäß sind die Kreisbögen des erzeugenden und erzeugten Schneckenprofils so zu wählen bzw. aufeinander abzustimmen, dass die Summe der Kammwinkel eines erzeugenden und eines erzeugten Schneckenprofils kleiner ist als $2\pi - 4\arccos\left(\dfrac{a}{2 \cdot ra}\right)$ und bei achsensymmetrischen Schneckenprofilen keiner der Mittelpunkte der Flankenkreise auf der Senkrechten zur Symmetrieachse des Profils liegt, die durch den Drehpunkt geht.

Aus dem beschriebenen Verfahren zur Erzeugung von ebenen, dicht kämmenden, selbstreinigenden und gleichsinnig drehenden Schneckenprofilen folgt für das erzeugte Schneckenprofil, dass

- das erzeugte Schneckenprofil geschlossen ist,
- das erzeugte Schneckenprofil konvex ist,
- jeder der Kreisbögen des erzeugten Schneckenprofils tangential in den nachfolgenden Kreisbogen des erzeugten Schneckenprofils übergeht, wobei ein Kreisbogen, dessen Radius gleich 0 ist, vorzugsweise wie ein Kreisbogen behandelt wird, dessen Radius gleich eps ist, wobei eps eine sehr kleine positive reelle Zahl ist, die gegen 0 strebt (eps<<1, eps →0),
- jeder der Kreisbögen des erzeugten Schneckenprofils innerhalb oder auf den Grenzen eines Kreisrings mit dem Außenradius ra' und dem Kernradius ri' liegt, dessen Mittelpunkt auf dem Drehpunkt des erzeugten Schneckenprofils liegt,
- mindestens einer der Kreisbögen des erzeugten Schneckenprofils den Außenradius ra' des erzeugten Schneckenprofils berührt,
- mindestens einer der Kreisbögen des erzeugten Schneckenprofils den Kernradius ri' des erzeugten Schneckenprofils berührt.

Aus dem beschriebenen Verfahren zur Erzeugung von ebenen, dicht kämmenden, selbstreinigenden, gleichsinnig drehenden Schneckenprofilen folgt ferner, dass nur in dem Fall, in dem der Kernradius ri des erzeugenden Schneckenprofils gleich der Differenz des Achsabstandes a minus dem Außenradius ra des erzeugenden Schneckenprofils ist (ri=a-ra), der Außenradius ra' des erzeugten Schneckenprofils gleich dem Außenradius ra des erzeugenden Schneckenprofils und der Kernradius ri' des erzeugten Schneckenprofils gleich dem Kernradius ri des erzeugenden Schneckenprofils ist.

Besitzt das erzeugende Schneckenprofil einen Kreisbogen mit dem Radius $r_i$=0, so weist das Schneckenprofil an der Stelle des Kreisbogens einen Knick auf, dessen Größe durch den Winkel $\alpha_i$ gekennzeichnet ist. Besitzt das erzeugte Schneckenprofil einen Kreisbogen mit dem Radius $r_{i'}$=0, so weist das Schneckenprofil an der Stelle des Kreisbogens einen Knick auf, dessen Größe durch den Winkel $\alpha_{i'}$ gekennzeichnet ist.

Das beschriebene Verfahren zur Erzeugung von ebenen, dicht kämmenden, selbstreinigenden, gleichsinnig drehenden Schneckenprofilen ist ferner dadurch charakterisiert, dass es sich allein mit Winkellineal und Zirkel ausführen lässt. So wird der tangentiale Übergang zwischen dem i-ten und dem (i+1)-ten Kreisbogen des erzeugenden Schneckenprofils konstruiert, indem um den Endpunkt des i-ten Kreisbogens ein Kreis mit dem Radius $r_{i+1}$ geschlagen wird und der näher zum Drehpunkt des erzeugenden Schneckenprofils gelegene Schnittpunkt dieses Kreises mit der Gerade, die durch den Mittelpunkt und den Endpunkt des i-ten Kreisbogens definiert ist, der Mittelpunkt des (i+1)-ten Kreisbogens ist. Praktischerweise wird man anstelle von Winkellineal und Zirkel ein Computerprogramm zur Konstruktion der Schneckenprofile verwenden.

Die nach dem allgemeinen Verfahren erzeugten Schneckenprofile sind unabhängig von einer Gangzahl z.

Das erzeugte Schneckenprofil kann ungleich dem erzeugenden Schneckenprofil sein. Wie der Fachmann anhand der Ausführungen leicht versteht, ist das beschriebene Verfahren insbesondere dazu geeignet, Übergangselemente zwischen Schneckenelementen unterschiedlicher Gangzahl zu erzeugen. Ausgehend von einem z-gängigen Schneckenprofil ist es möglich, das erzeugende und das erzeugte Schneckenprofil Schritt für Schritt so zu ändern, dass man schließlich ein Schneckenprofil mit einer Gangzahl z' ungleich z erhält. Es ist hierbei zulässig, die Anzahl der Kreisbögen während des Übergangs zu verringern oder zu vergrößern.

Bei symmetrischen Profilen kann das Verfahren vereinfacht werden, indem nur Teile der Schneckenprofile konstruiert und die fehlenden Teile durch Symmetrieoperationen aus den konstruierten Teilen erzeugt werden. Dies ist im Detail in PCT/EP2009/003549 beschrieben.

Es empfiehlt sich, das Verfahren zur Erzeugung von Schneckenprofilen auf einem Computer durchzuführen. Die Abmessungen der Schneckenelemente liegen dann in einer Form vor, in der sie einer CAD-Fräsmaschine zur Erzeugung der Schneckenelemente zugeführt werden können.

**Patentansprüche**

1. Schneckenelemente für paarweise gleichsinnig drehende Schneckenwellen für mehrwellige Schneckenmaschinen, **dadurch gekennzeichnet, dass** die Schneckenelemente, die auf den paarweise benachbarten Schneckenwellen paarweise gegenüberliegen, paarweise exakt abschabend sind und jeweils genau einem Schneckengang, einen Achsabstand a zwischen den Schneckenwellen und einen Außenradius ra aufweisen, wobei die Summe der Kammwinkel eines Wellenpaares kleiner ist als $2\pi - 4\arccos\left(\dfrac{a}{2 \cdot ra}\right)$ und bei achsensymmetrischen Schneckenprofilen keiner der Mittelpunkte der Flankenkreise auf der Senkrechten zur Symmetrieachse des Profils liegt, die durch den Drehpunkt geht und wobei mindestens ein Übergang vom Schneckenkamm zur Flanke einen von Null verschiedenen Radius $R_2$ aufweist.

2. Schneckenelemente nach Anspruch 1, **dadurch gekennzeichnet, dass** sich jeweils ein Querschnittsprofil aus fünf oder mehr Kreisbögen mit einem Radius größer oder gleich Null und kleiner oder gleich a zusammensetzt, wobei die Kreisbögen an ihren Endpunkten tangential ineinander übergehen.

3. Schneckenelemente nach einem der Ansprüche 1 bis 2, wobei die Schneckenelemente als Mischelemente oder Förderelemente ausgebildet sind.

4. Schneckenelemente nach einem der Ansprüche 1 bis 2, wobei die Schneckenelemente als Knetelemente ausgebildet sind.

5. Schneckenelemente, die von Schneckenelementen gemäß einem der Ansprüche 1 bis 4 abgeleitet sind und die Spiele zwischen Schneckenelementen und Gehäuse und/oder zwischen benachbarten Schneckenelementen aufweisen.

6. Schneckenelemente nach einem der Ansprüche 1 bis 5, **dadurch gekennzeichnet, dass** der auf den Achsabstand normierte Schneckenaußenradius der Schneckenelemente im Bereich von 0,52 bis 0,66 liegt.

7. Verwendung von Schneckenelementen nach einem der Ansprüche 1 bis 6 in einer Mehrwellenschneckenmaschine.

8. Verwendung nach Anspruch 7, **dadurch gekennzeichnet, dass** sich die Schneckenelemente paarweise an ihrem gesamten Umfang mit konstantem Spalt abreinigen.

9. Verwendung nach Anspruch 7, **dadurch gekennzeichnet, dass** sich die Schneckenelemente paarweise mit einem Spalt abreinigen, der nicht über den gesamten Umfang konstant ist.

10. Verwendung nach Anspruch 7, **dadurch gekennzeichnet, dass** die Profile der Schneckenelemente paarweise relativ zum zentrisch in der Gehäusebohrung gelegenen Drehpunkt verschoben sind.

11. Verfahren zur Extrusion plastischer Massen in einem Doppelschnecken- oder Mehrwellenextruder unter Verwendung von Schneckenelementen nach einem der Ansprüche 1 bis 6, wobei die Summe der Kammwinkel eines erzeugenden und eines erzeugten Schneckenprofils kleiner ist als $2\pi - 4\arccos\left(\dfrac{a}{2 \cdot ra}\right)$ und bei achsensymmetrischen Schneckenprofilen keiner der Mittelpunkte der Flankenkreise auf der Senkrechten zur Symmetrieachse des Profils liegt, die durch den Drehpunkt geht und wobei mindestens ein Übergang vom Schneckenkamm zur Flanke einen von Null verschiedenen Radius $R_2$ aufweist.

12. Verfahren nach Anspruch 11, **dadurch gekennzeichnet, dass** die plastischen Massen Thermoplaste oder Elastomere sind.

13. Verfahren nach Anspruch 12, **dadurch gekennzeichnet, dass** als Thermoplaste Polycarbonat, Polyamid, Polyester, insbesondere Polybutylenterephthalat und Polyethylenterephthalat, Polyether, thermoplastisches Polyurethan, Polyacetal, Fluorpolymer, insbesondere Polyvinylidenfluorid, Polyethersulfone, Polyolefin, insbesondere Polyethylen und Polypropylen, Polyimid, Polyacrylat, insbesondere Poly(methyl)methacrylat, Polyphenylenoxid, Polyphenylensulfid, Polyetherketon, Polyarytetherketon, Styrolpolymerisate, insbesondere Polystyrol, Styrolcopolymere, insbesondere Styrolacrylnitrilcopolymer, Acrylnitrilbutadienstyrolblockcopolymere, Polyvinylchlorid oder ein Blend von mindestens zwei der genannten Thermoplaste eingesetzt wird.

14. Verfahren nach Anspruch 12, **dadurch gekennzeichnet, dass** als Elastomere Styrol-Butadien-Kautschuk, Naturkautschuk, Butadien-Kautschuk, Isopren-Kautschuk, Ethylen-Propylen-Dien-Kautschuk, Ethylen-Propylen-Kautschuk, Butadien-Acrylnitril-Kautschuk, hydrierter Nitrilkautschuk, Butylkautschuk, Halobutylkautschuk, Chloropren-Kautschuk, Ethylen-Vinylacetat-Kautschuk, Polyurethan-Kautschuk, Thermoplastisches Polyurethan, Guttapercha, Arylatkautschuk, Fluorkautschuk, Siliconkautschuk, Sulfidkautschuk, Chlorsulfonyl-Polyäthylen-Kautschuk oder eine Kombination von mindestens zwei der genannten Elastomere eingesetzt wird.

15. Verfahren nach einem der Ansprüche 11 bis 14, **dadurch gekennzeichnet, dass** den plastischen Massen Füll- oder Verstärkungsstoffe oder Polymeradditive oder organische oder anorganische Pigmente oder Mischungen davon zugesetzt werden.

## Claims

1. Screw elements for screws co-rotating in pairs for multi-screw extruders, **characterized in that** the screw elements, pairs of which are opposite on the adjacent pairs of screws, are fully self-wiping in pairs and have in each case exactly one screw flight, a centreline distance a between the screws and an outer radius ra, where the sum of the flight tip angles of a pair of screws is less than $2\pi - 4\arccos\left(\frac{a}{2 \cdot ra}\right)$ and in the case of axially symmetrical screw profiles none of the centre points of the flank circles lies on the perpendicular to the axis of symmetry of the profile, which axis of symmetry passes through the point of rotation, and where at least one transition from the screw flight tip to the flank has a radius $R_2$ other than zero.

2. Screw elements according to Claim 1, **characterized in that** in each case one cross-sectional profile is composed of five or more circular arcs with a radius greater than or equal to zero and less than or equal to a, the circular arcs merging tangentially into one another at their end points.

3. Screw elements according to one of Claims 1 to 2, wherein the screw elements are constructed as mixing elements or conveying elements.

4. Screw elements according to one of Claims 1 to 2, wherein the screw elements are constructed as kneading elements.

5. Screw elements, which are derived from screw elements according to one of Claims 1 to 4 and which display clearances between screw elements and barrel and/or between neighbouring screw elements.

6. Screw elements according to one of Claims 1 to 5, **characterized in that** the outer screw radius of the screw elements normalized to the centreline distance lies in the range from 0.52 to 0.66.

7. Use of screw elements according to one of Claims 1 to 6 in a multi-screw extruder.

8. Use according to Claim 7, **characterized in that** the screw elements clean one another in pairs with a constant gap over their entire circumference.

9. Use according to Claim 7, **characterized in that** the screw elements clean one another in pairs with a gap which is not constant over the entire circumference.

10. Use according to Claim 7, **characterized in that** the profiles of the screw elements are displaced in pairs relative to the point of rotation located centrally in the barrel bore.

11. Process for extruding plastic compositions in a twin-screw or multi-screw extruder using screw elements according to any of Claims 1 to 6, wherein the sum of the flight tip angles of a generating and of a generated screw profile is less than $2\pi - 4\arccos\left(\frac{a}{2 \cdot ra}\right)$ and in the case of axially symmetrical screw profiles none of the centre points of the flank circles lies on the perpendicular to the axis of symmetry of the profile, which axis of symmetry passes through the point of rotation, and where at least one transition from the screw flight tip to the flank has a radius $R_2$ other than zero.

**12.** Process according to Claim 11, **characterized in that** the plastic compositions are thermoplastics or elastomers.

**13.** Process according to Claim 12, **characterized in that** the thermoplastics used are polycarbonate, polyamide, polyester, in particular polybutylene terephthalate and polyethylene terephthalate, polyether, thermoplastic polyurethane, polyacetal, fluoropolymer, in particular polyvinylidene fluoride, polyether sulphones, polyolefin, in particular polyethylene and polypropylene, polyimide, polyacrylate, in particular poly(methyl)methacrylate, polyphenylene oxide, polyphenylene sulphide, polyether ketone, polyarylether ketone, styrene polymers, in particular polystyrene, styrene copolymers, in particular styrene-acrylonitrile copolymer, acrylonitrile-butadiene-styrene block copolymers, polyvinyl chloride or a blend of at least two of the stated thermoplastics.

**14.** Process according to Claim 12, **characterized in that** the elastomers used are styrene-butadiene rubber, natural rubber, butadiene rubber, isoprene rubber, ethylene-propylene-diene rubber, ethylene-propylene rubber, butadiene-acrylonitrile rubber, hydrogenated nitrile rubber, butyl rubber, halobutyl rubber, chloroprene rubber, ethylene-vinyl acetate rubber, polyurethane rubber, thermoplastic polyurethane, gutta percha, acrylate rubber, fluororubber, silicone rubber, sulphide rubber, chlorosulphonyl-polyethylene rubber or a combination of at least two of the stated elastomers.

**15.** Process according to one of Claims 11 to 14, **characterized in that** filler or reinforcing materials or polymer additives or organic or inorganic pigments or mixtures thereof are added to the plastics compositions.

## Revendications

**1.** Eléments de vis sans fin pour des arbres à vis sans fin tournant par paire dans le même sens destinés à des machines à vis sans fin à plusieurs arbres, **caractérisés en ce que** les éléments de vis sans vis, qui se trouvent par paire l'un en face de l'autre sur les arbres à vis sans fin adjacents par paire, se raclent exactement par paire et présentent à chaque fois exactement un pas de vis, une distance d'axe a entre les arbres à vis sans fin et un rayon externe ra, la somme des angles de crête d'une paire d'arbres étant inférieure à $2\pi - 4 arccos\left(\frac{a}{2 * ra}\right)$ et dans le cas de profils de vis sans fin à symétrie axiale, aucun des centres des cercles de flanc ne se situe sur la perpendiculaire à l'axe de symétrie du profil qui passe dans le point de rotation et au moins une transition de crête de vis sans fin à flanc présentant un rayon $R_2$ différent de zéro.

**2.** Eléments de vis selon la revendication 1, **caractérisés en ce qu'**à chaque fois un profil transversal est composé de cinq arcs de cercle ou plus, d'un rayon supérieur ou égal à zéro et inférieur ou égal à a, les arcs de cercle passant tangentiellement l'un dans l'autre en leurs points d'extrémité.

**3.** Eléments de vis sans fin selon l'une quelconque des revendications 1 à 2, les éléments de vis sans fin étant conçus sous forme d'éléments de mélange ou de transport.

**4.** Eléments de vis sans fin selon l'une quelconque des revendications 1 à 2, les éléments de vis sans fin étant conçus sous forme d'éléments de malaxage.

**5.** Eléments de vis sans fin qui sont dérivés des éléments de vis sans fin selon l'une quelconque des revendications 1 à 4 et qui présentent, entre les éléments de vis sans fin et le châssis et/ou entre des éléments de vis sans fin adjacents, des jeux.

**6.** Eléments de vis sans fin selon l'une quelconque des revendications 1 à 5, **caractérisés en ce que** le rayon extérieur de la vis sans fin normalisé par rapport à la distance de l'axe des éléments de vis sans fin se situe dans la plage de 0,52 à 0,66.

**7.** Utilisation d'éléments de vis sans fin selon l'une quelconque des revendications 1 à 6 dans une machine à vis sans fin à plusieurs arbres.

**8.** Utilisation selon la revendication 7, **caractérisée en ce que** les éléments de vis sans fin se nettoient par paire sur toute leur périphérie avec un jeu constant.

**9.** Utilisation selon la revendication 7, **caractérisée en ce que** les éléments de vis sans fin se nettoient par paire avec un jeu qui n'est pas constant sur toute la périphérie.

**10.** Utilisation selon la revendication 7, **caractérisée en ce que** les profils des éléments de vis sans fin sont décalés par paire par rapport au point de rotation situé au centre dans le trou du cylindre.

**11.** Procédé d'extrusion de masses plastiques dans une extrudeuse à double vis sans fin ou à arbres multiples en utilisant des éléments de vis sans fin selon l'une quelconque des revendications 1 à 6, la somme des angles de crête d'un profil de vis sans fin qui produit et d'un profil de vis sans fin qui est produit étant inférieure à

$$2\pi - 4 arccos\left(\frac{a}{2 * ra}\right)$$

et dans le cas de profils de vis sans fin à symétrie axiale, aucun des centres des cercles de flanc ne se situe sur la perpendiculaire à l'axe de symétrie du profil qui passe dans le point de rotation et au moins une transition de crête de vis sans fin à flanc présentant un rayon $R_2$ différent de zéro.

**12.** Procédé selon la revendication 11, **caractérisé en ce que** les masses plastiques sont des thermoplastiques ou des élastomères.

**13.** Procédé selon la revendication 12, **caractérisé en ce qu'**on utilise comme thermoplastiques un polycarbonate, un polyamide, un polyester, en particulier le poly(téréphtalate de butylène) et le poly(téréphtalate d'éthylène), un polyéther, un polyuréthane thermoplastique, un polyacétal, un polymère fluoré, en particulier le poly(fluorure de vinylidène), un polyéthersulfone, une polyoléfine, en particulier le polyéthylène et le polypropylène, un polyimide, un polyacrylate, en particulier le polyméthacrylate (de méthyle), un poly(oxyde de phénylène), un poly/sulfure de phénylène), une polyéthercétone, une polyaryléthercétone, des polymères de styrène, en particulier le polystyrène, des copolymères de styrène, en particulier un copolymère de styrène-acrylonitrile, des copolymères à blocs d'acrylonitrile-butadiène-styrène, le poly(chlorure de vinyle) ou un mélange d'au moins deux des thermoplastiques mentionnés.

**14.** Procédé selon la revendication 12, **caractérisé en ce qu'**on utilise comme élastomères un caoutchouc de styrène-butadiène, un caoutchouc naturel, un caoutchouc de butadiène, un caoutchouc d'isoprène, un caoutchouc d'éthylène-propylène-diène, un caoutchouc d'éthylène-propylène, un caoutchouc de butadiène-acrylonitrile, un caoutchouc de nitrile hydrogéné, un caoutchouc de butyle, un caoutchouc d'halogénobutyle, un caoutchouc de chloroprène, un caoutchouc d'éthylène-acétate de vinyle, un caoutchouc de polyuréthane, un polyuréthane thermoplastique, le gutta-percha, un caoutchouc d'arylate, un caoutchouc fluoré, un caoutchouc de silicone, un caoutchouc de sulfure, un caoutchouc de chlorosulfonyl-polyéthylène ou une combinaison d'au moins deux des élastomères mentionnés.

**15.** Procédé selon l'une quelconque des revendications 11 à 14, **caractérisé en ce que** les masses plastiques sont additionnées de charges ou de substances de renforcement ou d'additifs pour polymères ou de pigments organiques ou inorganiques ou de mélanges de ceux-ci.

1) R = 0.5400  Mx = 0.0000
   $\alpha$ = 1.1835  My = 0.0000
2) R = 0.0000  Mx = 0.2040
   $\alpha$ = 0.3873  My = 0.5000
2') R = 1.0000  Mx = 0.2040
   $\alpha$ = 0.3873  My = -0.5000
1') R = 0.4600  Mx = 0.0000
   $\alpha$ = 1.1835  My = 0.0000

Figur 1a

1) R = 0.5800  Mx = 0.0000
   $\alpha$ = 1.0393  My = 0.0000
2) R = 0.0000  Mx = 0.2939
   $\alpha$ = 0.5315  My = 0.5000
2') R = 1.0000  Mx = 0.2939
   $\alpha$ = 0.5315  My = -0.5000
1') R = 0.4200  Mx = 0.0000
   $\alpha$ = 1.0393  My = 0.0000

Figur 1b

1) R = 0.6300  Mx = 0.0000
   $\alpha$ = 0.9168  My = 0.0000
2) R = 0.0000  Mx = 0.3833
   $\alpha$ = 0.6540  My = 0.5000
2') R = 1.0000  Mx = 0.3833
   $\alpha$ = 0.6540  My = -0.5000
1') R = 0.3700  Mx = 0.0000
   $\alpha$ = 0.9168  My = 0.0000

Figur 1c

1) R = 0.6800  Mx = 0.0000
   $\alpha$ = 0.8261  My = 0.0000
2) R = 0.0000  Mx = 0.4609
   $\alpha$ = 0.7447  My = 0.5000
2') R = 1.0000  Mx = 0.4609
   $\alpha$ = 0.7447  My = -0.5000
1') R = 0.3200  Mx = 0.0000
   $\alpha$ = 0.8261  My = 0.0000

Figur 1d

1) R = 0.6300  Mx = 0.0000
   α = 0.2618  My = 0.0000
2) R = 0.0000  Mx = 0.6085
   α = 0.4212  My = 0.1631
3) R = 0.9135  Mx = -0.1000
   α = 0.8878  My = -0.4135
3') R = 0.0865  Mx = -0.1000
   α = 0.8878  My = 0.4135
2') R = 1.0000  Mx = 0.6085
   α = 0.4212  My = -0.1631
1') R = 0.3700  Mx = 0.0000
   α = 0.2618  My = 0.0000

Figur 2a

1) R = 0.6300  Mx = 0.0000
   α = 0.2618  My = 0.0000
2) R = 0.0000  Mx = 0.6085
   α = 0.3631  My = 0.1631
3) R = 0.8120  Mx = -0.0500
   α = 0.9459  My = -0.3120
3') R = 0.1880  Mx = -0.0500
   α = 0.9459  My = 0.3120
2') R = 1.0000  Mx = 0.6085
   α = 0.3631  My = -0.1631
1') R = 0.3700  Mx = 0.0000
   α = 0.2618  My = 0.0000

Figur 2b

1) R = 0.6300  Mx = 0.0000
   α = 0.2618  My = 0.0000
2) R = 0.0000  Mx = 0.6085
   α = 0.2976  My = 0.1631
3) R = 0.7179  Mx = 0.0000
   α = 1.0114  My = -0.2179
3') R = 0.2821  Mx = 0.0000
   α = 1.0114  My = 0.2179
2') R = 1.0000  Mx = 0.6085
   α = 0.2976  My = -0.1631
1') R = 0.3700  Mx = 0.0000
   α = 0.2618  My = 0.0000

Figur 2c

1) R = 0.6300  Mx = 0.0000
   α = 0.2618  My = 0.0000
2) R = 0.0000  Mx = 0.6085
   α = 0.2234  My = 0.1631
3) R = 0.6314  Mx = 0.0500
   α = 1.0856  My = -0.1314
3') R = 0.3686  Mx = 0.0500
   α = 1.0856  My = 0.1314
2') R = 1.0000  Mx = 0.6085
   α = 0.2234  My = -0.1631
1') R = 0.3700  Mx = 0.0000
   α = 0.2618  My = 0.0000

Figur 2d

| | | |
|---|---|---|
| 1) | R = 0.6300 | Mx = 0.0000 |
| | α = 0.2618 | My = 0.0000 |
| 2) | R = 0.0000 | Mx = 0.6085 |
| | α = 0.1388 | My = 0.1631 |
| 3) | R = 0.5523 | Mx = 0.1000 |
| | α = 1.1702 | My = -0.0523 |
| 3') | R = 0.4477 | Mx = 0.1000 |
| | α = 1.1702 | My = 0.0523 |
| 2') | R = 1.0000 | Mx = 0.6085 |
| | α = 0.1388 | My = -0.1631 |
| 1') | R = 0.3700 | Mx = 0.0000 |
| | α = 0.2618 | My = 0.0000 |

RA = 0.6300

Figur 2e

Figur 2f

Figur 2g

Figur 2h

Figur 2i

Figur 2j

1) R = 0.5800  Mx = 0.0000
   α = 0.8315  My = 0.0000

2) R = 0.1250  Mx = 0.3066
   α = 0.4404  My = 0.3362

3) R = 1.0000  Mx = 0.0489
   α = 0.2989  My = -0.5000

3') R = 0.0000  Mx = 0.0489
   α = 0.2989  My = 0.5000

2') R = 0.8750  Mx = 0.3066
   α = 0.4404  My = -0.3362

1') R = 0.4200  Mx = 0.0000
   α = 0.8315  My = 0.0000

Figur 3a

1) R = 0.5800  Mx = 0.0000
   α = 0.6236  My = 0.0000

2) R = 0.1250  Mx = 0.3694
   α = 0.4420  My = 0.2657

3) R = 1.0000  Mx = -0.0541
   α = 0.5052  My = -0.5000

3') R = 0.0000  Mx = -0.0541
   α = 0.5052  My = 0.5000

2') R = 0.8750  Mx = 0.3694
   α = 0.4420  My = -0.2657

1') R = 0.4200  Mx = 0.0000
   α = 0.6236  My = 0.0000

Figur 3b

1) R = 0.5800  Mx = 0.0000
   α = 0.4157  My = 0.0000

2) R = 0.1250  Mx = 0.4162
   α = 0.4812  My = 0.1838

3) R = 1.0000  Mx = -0.1297
   α = 0.6738  My = -0.5000

3') R = 0.0000  Mx = -0.1297
   α = 0.6738  My = 0.5000

2') R = 0.8750  Mx = 0.4162
   α = 0.4812  My = -0.1838

1') R = 0.4200  Mx = 0.0000
   α = 0.4157  My = 0.0000

Figur 3c

1) R = 0.5800  Mx = 0.0000
   α = 0.2079  My = 0.0000

2) R = 0.1250  Mx = 0.4452
   α = 0.5382  My = 0.0939

3) R = 1.0000  Mx = -0.1974
   α = 0.8247  My = -0.5000

3') R = 0.0000  Mx = -0.1974
   α = 0.8247  My = 0.5000

2') R = 0.8750  Mx = 0.4452
   α = 0.5382  My = -0.0939

1') R = 0.4200  Mx = 0.0000
   α = 0.2079  My = 0.0000

Figur 3d

1)  R = 0.5800  Mx = 0.0000
     α = 0.8315  My = 0.0000

2)  R = 0.1250  Mx = 0.3066
     α = 0.3852  My = 0.3362

3)  R = 0.7500  Mx = 0.0898
     α = 0.3542  My = -0.2500

3')  R = 0.2500  Mx = 0.0898
     α = 0.3542  My = 0.2500

2')  R = 0.8750  Mx = 0.3066
     α = 0.3852  My = -0.3362

1')  R = 0.4200  Mx = 0.0000
     α = 0.8315  My = 0.0000

Figur 4a

1)  R = 0.5800  Mx = 0.0000
     α = 0.6236  My = 0.0000

2)  R = 0.1250  Mx = 0.3694
     α = 0.3468  My = 0.2657

3)  R = 0.7500  Mx = 0.0163
     α = 0.6004  My = -0.2500

3')  R = 0.2500  Mx = 0.0163
     α = 0.6004  My = 0.2500

2')  R = 0.8750  Mx = 0.3694
     α = 0.3468  My = -0.2657

1')  R = 0.4200  Mx = 0.0000
     α = 0.6236  My = 0.0000

Figur 4b

1)  R = 0.5800  Mx = 0.0000
     α = 0.4157  My = 0.0000

2)  R = 0.1250  Mx = 0.4162
     α = 0.3513  My = 0.1838

3)  R = 0.7500  Mx = -0.0337
     α = 0.8037  My = -0.2500

3')  R = 0.2500  Mx = -0.0337
     α = 0.8037  My = 0.2500

2')  R = 0.8750  Mx = 0.4162
     α = 0.3513  My = -0.1838

1')  R = 0.4200  Mx = 0.0000
     α = 0.4157  My = 0.0000

Figur 4c

1)  R = 0.5800  Mx = 0.0000
     α = 0.2079  My = 0.0000

2)  R = 0.1250  Mx = 0.4452
     α = 0.3748  My = 0.0939

3)  R = 0.7500  Mx = -0.0767
     α = 0.9881  My = -0.2500

3')  R = 0.2500  Mx = -0.0767
     α = 0.9881  My = 0.2500

2')  R = 0.8750  Mx = 0.4452
     α = 0.3748  My = -0.0939

1')  R = 0.4200  Mx = 0.0000
     α = 0.2079  My = 0.0000

Figur 4d

1)  R = 0.5800   Mx = 0.0000
    α = 0.4157   My = 0.0000

2)  R = 0.2500   Mx = 0.3019
    α = 0.4577   My = 0.1333

3)  R = 0.7500   Mx = -0.0192
    α = 0.6973   My = -0.2500

3') R = 0.2500   Mx = -0.0192
    α = 0.6973   My = 0.2500

2') R = 0.7500   Mx = 0.3019
    α = 0.4577   My = -0.1333

1') R = 0.4200   Mx = 0.0000
    α = 0.4157   My = 0.0000

Figur 5a

1)  R = 0.5800   Mx = -0.0800
    α = 0.4157   My = 0.0000

2)  R = 0.2500   Mx = 0.2219
    α = 0.4577   My = 0.1333

3)  R = 0.7500   Mx = -0.0992
    α = 0.6973   My = -0.2500

3') R = 0.2500   Mx = -0.0992
    α = 0.6973   My = 0.2500

2') R = 0.7500   Mx = 0.2219
    α = 0.4577   My = -0.1333

1') R = 0.4200   Mx = -0.0800
    α = 0.4157   My = 0.0000

Figur 5b

1)  R = 0.5800   Mx = -0.1600
    α = 0.4157   My = 0.0000

2)  R = 0.2500   Mx = 0.1419
    α = 0.4577   My = 0.1333

3)  R = 0.7500   Mx = -0.1792
    α = 0.6973   My = -0.2500

3') R = 0.2500   Mx = -0.1792
    α = 0.6973   My = 0.2500

2') R = 0.7500   Mx = 0.1419
    α = 0.4577   My = -0.1333

1') R = 0.4200   Mx = -0.1600
    α = 0.4157   My = 0.0000

Figur 5c

```
RG  = 0.6300          VPR = 0.0500
RV  = 0.5800          VPW= 0.0000
RA  = 0.5800          VLR = 0.0000
RF  = 0.5800          VLW= 0.0000
S   = 0.0000          VRR = 0.0000
D   = 0.0000          VRW= 0.0000
T   = 2.0000
```

Figur 6a

```
RG  = 0.6300          VPR = 0.0599
RV  = 0.5800          VPW= 1.0472
RA  = 0.5800          VLR = 0.0000
RF  = 0.5800          VLW= 0.0000
S   = 0.0000          VRR = 0.0000
D   = 0.0000          VRW= 0.0000
T   = 2.0000
```

Figur 6b

```
RG  = 0.6300          VPR = 0.1381
RV  = 0.5800          VPW= 2.0944
RA  = 0.5800          VLR = 0.0000
RF  = 0.5800          VLW= 0.0000
S   = 0.0000          VRR = 0.0000
D   = 0.0000          VRW= 0.0000
T   = 2.0000
```

Figur 6c

```
RG  = 0.6300          VPR = 0.2100
RV  = 0.5800          VPW= 3.1416
RA  = 0.5800          VLR = 0.0000
RF  = 0.5800          VLW= 0.0000
S   = 0.0000          VRR = 0.0000
D   = 0.0000          VRW= 0.0000
T   = 2.0000
```

Figur 6d

RG  = 0.5800
RV  = 0.5800
RA  = 0.5700
RF  = 0.5600
S   = 0.0200
D   = 0.0200
T   = 2.0000

VPR = 0.0000
VPW= 0.0000
VLR = 0.0000
VLW= 0.0000
VRR = 0.0000
VRW= 0.0000

Figur 7a

RG  = 0.5800
RV  = 0.5800
RA  = 0.5600
RF  = 0.5500
S   = 0.0200
D   = 0.0300
T   = 2.0000

VPR = 0.0000
VPW= 0.0000
VLR = 0.0000
VLW= 0.0000
VRR = 0.0000
VRW= 0.0000

Figur 7b

RG  = 0.5800
RV  = 0.5800
RA  = 0.5700
RF  = 0.5500
S   = 0.0400
D   = 0.0300
T   = 2.0000

VPR = 0.0000
VPW= 0.0000
VLR = 0.0000
VLW= 0.0000
VRR = 0.0000
VRW= 0.0000

Figur 7c

RG  = 0.5800
RV  = 0.5800
RA  = 0.5800
RF  = 0.5500
S   = 0.0600
D   = 0.0300
T   = 2.0000

VPR = 0.0000
VPW= 0.0000
VLR = 0.0000
VLW= 0.0000
VRR = 0.0000
VRW= 0.0000

Figur 7d

RG = 0.5800
RV = 0.5800
RA = 0.5800
RF = 0.5500
S = 0.0600
D = 0.0300
T = 2.0000

VPR = 0.0000
VPW= 0.0000
VLR = 0.0200
VLW= 0.0000
VRR = 0.0200
VRW= 0.0000

Figur 8a

RG = 0.5800
RV = 0.5800
RA = 0.5800
RF = 0.5500
S = 0.0600
D = 0.0300
T = 2.0000

VPR = 0.0000
VPW= 0.0000
VLR = 0.0200
VLW= 1.0472
VRR = 0.0200
VRW= 1.0472

Figur 8b

RG = 0.5800
RV = 0.5800
RA = 0.5800
RF = 0.5500
S = 0.0600
D = 0.0300
T = 2.0000

VPR = 0.0000
VPW= 0.0000
VLR = 0.0200
VLW= 2.0944
VRR = 0.0200
VRW= 2.0944

Figur 8c

RG = 0.5800
RV = 0.5800
RA = 0.5800
RF = 0.5500
S = 0.0600
D = 0.0300
T = 2.0000

VPR = 0.0000
VPW= 0.0000
VLR = 0.0200
VLW= 3.1416
VRR = 0.0200
VRW= 3.1416

Figur 8d

Figur 9a

Figur 9b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3900187 A

- EP 2009003549 W

**In der Beschreibung aufgeführte Nicht-Patentliteratur**

- Klemens Kohlgrüber: Der gleichläufige Doppelschneckenextruder. Hanser Verlag, 2007, 96 ff
- **ZWEIFEL, H.** Stabilization of Polymeric Materials. Springer, 1997
- Antioxidants. **SCHWARZENBACH, K. et al.** Plastics Additives Handbook. Hanser, 2001

- **CHENG, H.N. ; SCHILLING, F.C. ; BOVEY, F.A.** 13C Nuclear Magnetic Resonance Observation of the Oxidation of Polyethylene. *Macromolecules,* 1976, vol. 9, 363-365